# EUROPÄISCHE PATENTANMELDUNG

(11) **EP 3 922 452 A1**
(43) Veröffentlichungstag der Anmeldung: **15.12.2021**
(21) Anmeldenummer: 20178777.7
(22) Anmeldetag: 08.06.2020
(51) Int. Cl.: B32B 5/12, B29C 70/06, B32B 1/00, B32B 5/02, B32B 5/08, B32B 5/26, C08J 5/04, G06F 1/16, G06F 1/18

(54) **MEHRSCHICHTVERBUNDWERKSTOFF**

(71) Anmelder: LANXESS Deutschland GmbH, 50569 Köln (DE)
(72) Erfinder: SCHRÖER, Lukas, 45355 Essen (DE); WANDERS, Martin, 51519 Odenthal-Neschen (DE); SEIDEL, Stefan, 33102 Paderborn (DE)

(57) **Zusammenfassung**

Die vorliegende Erfindung betrifft einen Mehrschichtverbundwerkstoff, ein Verfahren zu dessen Herstellung sowie ein Gehäuseteil oder ein Gehäuse eines elektronischen Geräts, umfassend einen solchen Mehrschichtverbundwerkstoff.

## Beschreibung

Die vorliegende Erfindung betrifft einen Mehrschichtverbundwerkstoff auf Basis wenigstens eines thermoplastischen Kunststoffs aus der Gruppe bestehend aus Polycarbonaten, Polybutylenterephthalaten, Styrol-Acrylnitrilen, Polystyrolen, Polyetheretherketonen, Polyetherimiden, Polysulfonen, thermoplastischen Elastomeren, Polyphenylensulfiden und deren Mischungen, insbesondere Polycarbonat, ein Verfahren zu dessen Herstellung sowie ein Gehäuseteil oder ein Gehäuse eines elektronischen Geräts, umfassend einen solchen Mehrschichtverbundwerkstoff.

### Stand der Technik

Aus dem Stand der Technik sind zahlreiche Faserverbundwerkstoffe und Verfahren zu deren Herstellung bekannt. WO2013/098224A1 beschreibt ein Verfahren zur Herstellung eines Faserverbundwerkstoffs in Form eines kunststoffimprägnierten Breitfaserbandes und eine aus Abschnitten des Breitfaserbandes erhältliche Mehrschichtverbundstruktur. Als Kunststoffmatrix können sowohl duroplastische, als auch thermoplastische Kunststoffe verwendet werden.

DE102012200059A1 beschreibt einen faserverstärkten Mehrschichtverbundwerkstoff dessen Kunststoffmatrix ein thermoplastischer Kunststoff ist. Allerdings sind die aus dem Stand der Technik bekannten Mehrschichtverbundwerkstoffe hinsichtlich ihrer optischen, klanglichen, haptischen und mechanischen Eigenschaften erheblich verbesserungswürdig, wenn es darum geht, sich den Eigenschaften von Gehäusen aus Metalllegierungen anzunähern.

In den letzten Jahren besteht insbesondere auf dem Gebiet der transportablen elektronischen Geräte, im Rahmen der vorliegenden Erfindung insbesondere Mobiltelefone, Laptops oder Tablets, der Trend zu immer leichteren und dünneren Geräten. Dies erfordert unter anderem die Entwicklung von extrem leichten und dünnen Gehäusen, die gleichzeitig eine hohe mechanische Stabilität aufweisen, um Bildschirm und Elektronik des Geräts zu schützen. Als Stand der Technik für solche Zwecke haben sich mittlerweile beispielsweise Magnesium-Aluminium-Legierungen etabliert. Vorteilhaft an Gehäusen aus solchen Metalllegierungen sind ihr leichtes Gewicht und ihre hohe mechanische Stabilität. Darüber hinaus werden derartige Metallgehäuse vom Verbraucher auch als ästhetisch ansprechend und hochwertig empfunden. Gehäuse aus herkömmlichem Plastik werden vom Verbraucher dagegen als eher minderwertig empfunden und können auch im Hinblick auf die mechanischen Eigenschaften nicht mit den Metalllegierungen konkurrieren. Letztere haben allerdings den erheblichen Nachteil, dass sie aus kostenintensiven Rohstoffen in aufwändigen und energieintensiven Verfahren hergestellt werden müssen, was mit hohen Herstellungskosten verbunden ist. Auch im Hinblick auf die Ressourcenschonung ist es deshalb wünschenswert, gleichwertige Ersatzmaterialien für die im Stand der Technik verwendeten Metalllegierungen zu entwickeln.

Einen Ansatz hierzu bietet WO 2017/072053 A1 worin mehrschichtige Faserverbundwerkstoffe zu diesem Zweck beschrieben werden. Die in WO 2017/072053 A1 beschriebenen mehrschichtigen Faserverbundwerkstoffe basieren jedoch ausschließlich auf unidirektional orientierten Verstärkungsfasern. In jeder Schicht weisen die in den mehrschichtigen Faserverbundwerkstoffen gemäß WO 2017/072053 A1 verarbeiteten Fasermaterialien nur eine Orientierung auf und führen damit zu deutlich anisotropen mechanischen Eigenschaften. Hierdurch unterscheiden sich die mehrschichtigen Faserverbundwerkstoffe gemäß WO 2017/072053 A1 ganz erheblich von den Eigenschaften metallischer Werkstoffe in Bezug auf optische, haptische, klangliche und mechanische Eigenschaften.

Im Stand der Technik werden als Kunststoffmatrixmaterialien für Faserverbundwerkstoffe vor allem thermisch härtende duroplastische Kunststoffe (Duroplaste), wie Harnstoff-Formaldehyd-Harze oder Epoxidharze, oder thermoplastische Kunststoffe (Thermoplaste), wie Polyamide, Polypropylen oder Polyethylen, eingesetzt. Viele technisch interessante Thermoplaste, insbesondere Polycarbonate, haben den Nachteil hoher Einsatztemperaturen, hoher Transparenzgrade, hoher Steifigkeit u.v.m., sowie gegenüber üblicherweise eingesetzten thermoplastischen Kunststoffen den Nachteil, dass sie wenig Veranlagung zum Kriechen aufweisen und somit bei konstanter Spannung zu Rissbildung neigen. Dies ist besonders beim Einsatz in Endlosfasern enthaltenden Faserverbundwerkstoffen höchst problematisch. Denn Faserverbundwerkstoffe, die in ihrer Kunststoffmatrix Endlosfasern enthalten, stehen durch die Endlosfasern unter einer konstanten Spannung. Aus diesem Grund spielten Thermoplaste mit ähnlichen Eigenschaften wie Polycarbonate in der Praxis als Kunststoffmatrix für solche Endlosfasern enthaltenden Faserverbundwerkstoffe bisher nur eine untergeordnete Rolle. Grundsätzlich wäre es jedoch wünschenswert, das Einsatzgebiet von Thermoplasten, insbesondere Polycarbonate, auch auf Compositmaterialien auszuweiten, denn Polycarbonate weisen gegenüber den anderen üblichen thermoplastischen Kunststoffen, wie Polyamid oder Polypropylen, einen geringeren Volumenschwund beim Aushärten auf. Ferner weisen Polycarbonate höhere Wärmeformbeständigkeiten auf.

Vor diesem Hintergrund besteht nach wie vor das Bedürfnis, zu den oben beschriebenen Metalllegierungen alternative leichtgewichtige Materialien zu entwickeln, die ähnliche optische, haptische, klangliche und mechanische Eigenschaften wie die Gehäuse auf Basis von Metalllegierungen aufweisen, sich aber kostengünstiger herstellen lassen.

Ausgehend vom Stand der Technik bestand die Aufgabe der vorliegenden Erfindung darin, ein neues Material bereit zu stellen, das metallisches Aussehen, metallischen Klang, metallische Haptik und metallähnliche mechanische Eigenschaften aufweist und als Gehäuseteilmaterial für ein Gehäuse eines elektronischen Geräts besser geeignet ist, als die Materialien der WO 2017/072053 A1**.** Hierfür sollte das Material darüber hinaus leichtgewichtig sein, sich kostengünstig herstellen lassen und eine möglichst glatte und damit optisch ansprechende Oberfläche aufweisen.

Es wurde überraschenderweise gefunden, dass man einen Mehrschichtverbundwerkstoff mit besonders ausgeprägter metallischer Haptik und Optik sowie einem nahezu metallischen, d.h. isotropen mechanischen Verhalten erhält, wenn mindestens drei Faserverbundwerkstofflagen die relativ zueinander definiert werden als zwei außenliegende Faserverbundwerkstofflagen und mindestens eine innenliegende Faserverbundwerkstofflage übereinander liegen, wobei jede dieser mindestens drei Faserverbundwerkstofflagen Endlosfasern in Form eines textilen Halbzeugs enthält, und die Endlosfasern innerhalb der jeweiligen Faserverbundwerkstofflage beliebig orientiert sowie in thermoplastischem Kunststoff eingebettet sind, mit der Maßgabe dass im Falle nur einer innenliegenden Faserverbundwerkstofflage diese im Verhältnis zu den außenliegenden Faserverbundwerkstofflagen um 0° bis 90° rotiert ist, oder im Falle von zwei und mehr innenliegenden Faserverbundwerkstofflagen diese innenliegenden Faserverbundwerkstofflagen im Wesentlichen gleich orientiert sind und ihre Orientierung zu den außenliegenden Faserverbundwerkstofflagen um 0° bis 90° rotiert ist, und die Orientierung einer Faserverbundwerkstofflage durch die Orientierung des die Endlosfasern enthaltenden textilen Halbzeugs festgelegt wird.

### Erfindungsgegenstand

Gegenstand der vorliegenden Erfindung und Lösung der Aufgabe ist ein Mehrschichtverbundwerkstoff, umfassend zwei außenliegende Faserverbundwerkstofflagen (3) und mindestens eine innenliegende Faserverbundwerkstofflage (2), wobei jede dieser mindestens drei Faserverbundwerkstofflagen (2) und (3), Endlosfasern (4) in Form eines textilen Halbzeugs, vorzugsweise in Form eines balancierten Gewebes Vlieses oder Fasermatte, enthält, wobei die Endlosfasern (4) innerhalb der jeweiligen Faserverbundwerkstofflage (2) oder (3) beliebig orientiert und in wenigstens einem thermoplastischen Kunststoff (5) eingebettet sind,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird, als thermoplastischer Kunststoff wenigstens einer aus der Gruppe bestehend aus Polycarbonaten, Polybutylenterephthalaten, Styrol-Acrylnitrilen, Polystyrolen, Polyetheretherketonen, Polyetherimiden, Polysulfonen, thermoplastischen Elastomeren, Polyphenylensulfiden und deren Mischungen, insbesondere Polycarbonat, eingesetzt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet. Die erfindungsgemäßen Mehrschichtverbundwerkstoffe weisen den Vorteil auf, dass sie sich kostengünstig herstellen lassen und eine quasi-isotrope Steifigkeit aufweisen. Zudem zeichnen sich die erfindungsgemäßen Mehrschichtverbundwerkstoffe durch eine gute Lackierbarkeit und Hinterspritzbarkeit aus, wenn als thermoplastischer Kunststoff ein bereits gut lackierbar oder hinterspritzbarer Kunststoff ausgewählt wird.

Vorteilhaft an den erfindungsgemäßen Mehrschichtverbundwerkstoffen ist ferner, dass deren Gestaltung, insbesondere in Form eines Gehäuseteils, durch die Thermoformbarkeit des Mehrschichtverbundwerkstoffs selber besonders einfach und flexibel erfolgen kann und durch diesen Verarbeitungsschritt weitestgehend beliebige Oberflächenqualitäten eingestellt werden können.

Praktische Versuche im Rahmen der vorliegenden Erfindung haben gezeigt, dass die erfindungsgemäßen Mehrschichtverbundwerkstoffe unter zweidimensionaler Biegebelastung, insbesondere beim Einsatz von Endlosfasern in Form textiler Halbzeuge bei denen es keine vorherrschende Faserorientierung gibt, im 3- oder 4-Punktbiegeversuch unter jeder der vorliegenden Faserorientierungen weitestgehend identische Eigenschaften aufwiesen. Insbesondere die Biegefestigkeit unterschied sich zwischen zwei Orientierungen, die sich vorzugsweise um einen Winkel von 90° unterscheiden, nur um weniger als 5%!

Gegenstand der Erfindung ist ferner ein Verfahren zur Herstellung eines erfindungsgemäßen Mehrschichtverbundwerkstoffs umfassend folgende Schritte:
- Bereitstellen mindestens einer innenliegenden Faserverbundwerkstofflage (2) und zweier außenliegenden Faserverbundwerkstofflagen (3),
- Einlegen der mindestens einen innenliegenden Faserverbundwerkstofflage (2) zwischen die außenliegenden Faserverbundwerkstofflagen (3),
- Verbinden der geschichteten Faserverbundwerkstofflagen (2) und (3), insbesondere mittels Druck und Temperatur, zum Mehrschichtverbundwerkstoff (1),
mit der Maßgabe, dass jede dieser mindestens drei Faserverbundwerkstofflagen (2) und (3) Endlosfasern (4) in Form eines textilen Halbzeugs, vorzugsweise in Form eines balancierten Gewebes, Vlieses oder Fasermatte, enthält, wobei die Endlosfasern (4) innerhalb der jeweiligen Faserverbundwerkstofflage (2) oder (3) beliebig orientiert und in wenigstens einem thermoplastischem Kunststoff (5) eingebettet sind, und
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird, als thermoplastischer Kunststoff wenigstens einer aus der Gruppe bestehend aus Polycarbonaten, Polybutylenterephthalaten, Styrol-Acrylnitrilen, Polystyrolen, Polyetheretherketonen, Polyetherimiden, Polysulfonen, thermoplastischen Elastomeren, Polyphenylensulfiden und deren Mischungen, insbesondere Polycarbonat, eingesetzt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet. Gegenstand der Erfindung ist ferner ein Verfahren zur Herstellung eines erfindungsgemäßen Gehäuses oder Gehäuseteils umfassend wenigstens einen erfindungsgemäßen Mehrschichtverbundwerkstoff.

Gegenstand der Erfindung ist zudem die Verwendung wenigstens eines Mehrschichtverbundwerkstoffs umfassend zwei außenliegende Faserverbundwerkstofflagen (3) und mindestens eine innenliegende Faserverbundwerkstofflage (2), wobei jede dieser mindestens drei Faserverbundwerkstofflagen (2) und (3) Endlosfasern (4) in Form eines textilen Halbzeugs, vorzugsweise in Form eines balancierten Gewebes, Vlieses oder Fasermatte, enthält, wobei die Endlosfasern (4) innerhalb der jeweiligen Faserverbundwerkstofflage (2) oder (3) beliebig orientiert und in wenigstens einem thermoplastischen Kunststoff (5) eingebettet sind, zur Herstellung von Gehäusen, vorzugsweise von Gehäusen für elektrische oder elektronische Geräte,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird, als thermoplastischer Kunststoff wenigstens einer aus der Gruppe bestehend aus Polycarbonaten, Polybutylenterephthalaten, Styrol-Acrylnitrilen, Polystyrolen, Polyetheretherketonen, Polyetherimiden, Polysulfonen, thermoplastischen Elastomeren, Polyphenylensulfiden und deren Mischungen, insbesondere Polycarbonat, eingesetzt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet.

Gegenstand der Erfindung sind schließlich Erzeugnisse, vorzugsweise Gehäuse, besonders bevorzugt Gehäuse für elektrische oder elektronische Geräte, umfassend wenigstens einen erfindungsgemäßen Mehrschichtverbundwerkstoff.

Der Begriff **Endlosfaser** ist im Sinne der Erfindung als Abgrenzung zu den dem Fachmann ebenfalls bekannten Kurz- oder Langfasern zu verstehen. Endlosfasern erstrecken sich in der Regel über die gesamte Länge einer Faserverbundwerkstofflage. Die vorliegende Erfindung bezieht sich auf DIN 60001, wonach Fasern mit einer Länge von mindestens 1.000 mm, d. h. einem Meter, als Endlosfasern bezeichnet werden.

Insbesondere nach Verarbeitung und Zuschnitt können die hergestellten Erzeugnisse kleinere Abmessungen als 1m haben und damit durchaus Faserlängen von unter einem Meter aufweisen, die im Sinne der Erfindung immer noch als Endlosfasern bezeichnet werden. Zum Begriff Endlosfaser (Filament) siehe auch: **https://de.wikipedia.org/wiki/Faser-Kunststoff-Verbund**

Der Begriff **textiles Halbzeug** bzw. **Textil** ist im Rahmen der Erfindung ein textiles Produkt, das mit handelsüblichen Herstellverfahren, insbesondere dem Weben, fabriziert wird und bei dem die beschriebenen Endlosfasern als Ausgangswerkstoff verwendet werden. Im Sinne der Erfindung liegen die Endlosfasern damit über die gesamte Textillänge und über die gesamte Textilbreite vor. Durch die Imprägnierung mit der Kunststoffmatrix ändert sich nichts an der Länge und Position der Endlosfasern, sodass sich auch bei einer Verstärkung durch ein textiles Halbzeug bzw. Textil die Endlosfasern über die gesamte Länge bzw. die gesamte Breite des Faserverbundwerkstoffs erstrecken. Ein Textil kann auch aus Stapelfasen oder Wirrmatten bestehen, bei denen die einzelnen Endlosfasern sich zwar nicht über die gesamte Breite eines Faserverbundwerkstoffs und damit eines erfindungsgemäßen Mehrschichtverbundwerkstoffs erstrecken, die aber einzeln betrachtet deutlich länger als üblicherweise als "Langfasern" bezeichnete Fasern sind und zusätzlich durch formschlüssige Verbindung ein Garn oder eine Matte bilden, die sich wiederum über die gesamte Breite eines Faserverbundkunststoffs und damit eines erfindungsgemäßen Mehrschichtverbundwerkstoffs erstrecken und somit im Sinne der Erfindung auch als Endlosfasern klassifiziert werden.

Unter **textilem Halbzeug** im Sinne der vorliegenden Erfindung wird auch ein Endlos-Faserband verstanden, wobei es sich um eine Mehrzahl von zusammengeführten Rovings handelt und wobei es sich bei den Rovings um Bündel aus vielen Endlosfasern ohne Drall handelt.

**Quasi-isotrope** Steifigkeit im Sinne der Erfindung bedeutet, dass die Biegesteifigkeit des Faserverbundwerkstoffes in den Hauptrichtungen 0° und 90° in der Ebene des Faserverbundmaterials sich um weniger als 5% voneinander unterscheiden.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Dies gilt ebenso für Kombinationen einzelner chemischer Komponenten mit allen in der vorliegenden Anmeldung aufgeführten physikalischen Parametern, Die im Rahmen dieser Anmeldung genannten Normen beziehen sich auf die zum Anmeldetag dieser Erfindung geltende Fassung.

### Bevorzugte Ausführungsformen der Erfindung

Zur Verbesserung der Optik und Glattheit der Oberfläche eines erfindungsgemäßen Mehrschichtverbundwerkstoffs hat es sich als vorteilhaft erwiesen, wenn dieser Mehrschichtverbundwerkstoff vorzugsweise ein Dickenverhältnis der Summe der beiden außenliegenden Faserverbundwerkstofflagen zur Summe aller innenliegenden Faserverbundwerkstofflagen im Bereich von 0,25 bis 5 aufweist, besonders bevorzugt ein Dickenverhältnis im Bereich von 0,8 bis 3, ganz besonders bevorzugt ein Dickenverhältnis im Bereich von 1 bis 2,5.

Vorzugsweise liegen die Endlosfasern in einem erfindungsgemäßen Faserverbundwerkstoff in Form eines textilen Halbzeugs aus der Gruppe balancierter Gewebe, Vlies und Fasermatte vor, wobei die Endlosfasern innerhalb der jeweiligen Faserverbundwerkstofflage beliebig ausgerichtet sind. Insbesondere bevorzugt sind Faserverbundwerkstoffe in Form eines textilen Halbzeugs, worin die Endlosfasern in Form eines balancierten Gewebes vorliegen und worin die Endlosfasern beliebig ausgerichtet sind.

**Gewebe** sind textile Flächengebilde, die aus zwei Fadensystemen, Kette (Kettfäden) und Schuss (Schussfäden), bestehen, die sich in der Sicht auf die Gewebefläche unter einem Winkel von genau oder annähernd 90° mustermäßig kreuzen. Die Kettfäden verlaufen in Längsrichtung des Gewebes, parallel zur Gewebekante, und die Schussfäden in Querrichtung, parallel zum Geweberand. Die Herstellung von Geweben erfolgt entweder durch Handweben auf einem Handwebstuhl oder maschinell auf einer Webmaschine. Die Art der Verkreuzung von Kett- und Schussfäden in einem Gewebe wird als Bindung bezeichnet. Je nachdem, welche Kettfäden beim Weben angehoben bzw. gesenkt werden, entsteht eine unterschiedliche Verteilung von Bindungspunkten und damit eine unterschiedliche Gewebebindung, die das Warenbild bestimmt. Den Teil der Bindung, der die Art der Verkreuzung der Kett- und Schussfäden bis zu ihrer Wiederholung angibt, wird als Rapport bezeichnet. Entsprechend der Grundbindungen von Geweben gibt es Leinwand-, Köper- oder Atlasgewebe, wovon erfindungsgemäß Köpergewebe bevorzugt sind. Als **balanciert** gilt im Sinne der Erfindung ein Gewebe, bei dem die Anzahl der Kett- und Schussfäden über einer definierte Länge identisch ist und Kett- und Schussfaden die gleiche Garnstärke haben.

Vorzugsweise sind die einzelnen erfindungsgemäß einzusetzenden Faserverbundwerkstofflagen erhältlich durch Auftragen von geschmolzenem Polycarbonat basierten Kunststoff auf ein über die Glasübergangstemperatur des einzusetzenden Kunststoffs vorgeheiztes textiles Halbzeug, auch als Rohtextil bezeichnet.

Vorzugsweise liegt der Faservolumengehalt der außenliegenden Faserverbundwerkstofflagen bei höchstens 60 Vol.-%, bezogen auf das Volumen der außenliegenden Faserverbundwerkstofflagen.

Vorzugsweise wird der Kunststoff ausgewählt aus der Gruppe bestehend aus Polycarbonaten, Polybuthylenterephtalaten, Styrol-Acrylnitrilen, Polystyrolen, Polyetheretherketonen, Polyetherimiden, Polysulfonen, thermoplastischen Elastomeren, Polyphenylensulfiden und deren Mischungen. Besonders bevorzugt sind thermoplastisches Polyurethan und Polycarbonat. Insbesondere bevorzugt ist Polycarbonat.

### Polycarbonat

Als ein auf Polycarbonat basierender Kunststoff wird im Rahmen der vorliegenden Erfindung ein Kunststoff verstanden, der mindestens 50 Gew.-%, vorzugsweise mindestens 60 Gew.-%, bevorzugt mindestens 70 Gew.-%, insbesondere mindestens 80 Gew.-%, besonders bevorzugt mindestens 90 Gew.-%, ganz besonders bevorzugt mindestens 95 Gew.-%, insbesondere mindestens 97 Gew.-% Polycarbonat enthält. Anders ausgedrückt kann ein auf Polycarbonat basierender Kunststoff im Rahmen der vorliegenden Erfindung höchstens zu 50 Gew.-%, vorzugsweise höchstens 40 Gew.-%, bevorzugt höchstens 30 Gew.-%, insbesondere höchstens 20 Gew.-%, besonders bevorzugt höchstens 10 Gew.-%, ganz besonders bevorzugt höchstens 5 Gew.-%, insbesondere höchstens 3 Gew.-% einen oder mehrere von Polycarbonat verschiedene Kunststoffe als Blendpartner enthalten.

Vorzugsweise besteht der auf Polycarbonat basierende Kunststoff zu 100 Gew.-% aus Polycarbonat.

Polycarbonat im Sinne der vorliegenden Erfindung sind auch Mischungen verschiedener Polycarbonate. Ferner wird Polycarbonat hier als Oberbegriff verwendet und umfasst damit sowohl Homopolycarbonate als auch Copolycarbonate. Die Polycarbonate können ferner in bekannter Weise linear oder verzweigt sein.

Gemäß einer besonderen Ausführungsform der Erfindung besteht der auf Polycarbonat basierende Kunststoff im Wesentlichen, besonders bevorzugt zu 70 Gew.-%, ganz besonders bevorzugt zu 80 Gew.-%, insbesondere bevorzugt zu 90 Gew.-%, insbesondere ganz besonders bevorzugt zu 100 Gew.-% aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen. Einzelheiten der Herstellung von Polycarbonaten sind dem Fachmann seit mindestens etwa 40 Jahren gut bekannt. Beispielhaft sei hier auf Schnell, Chemistry and Physics of Polycarbonates, Polymer Reviews, Volume 9, Interscience Publishers, New York, London, Sydney 1964**,** auf D. Freitag, U. Grigo, P.R. Müller, H. Nouvertne, BAYER AG, Polycarbonates in Encyclopedia of Polymer Science and Engineering, Volume 11, Second Edition, 1988, Seiten 648-718 und schließlich auf U. Grigo, K. Kirchner und P.R. Müller Polycarbonate in BeckerBraun, Kunststoff-Handbuch, Band 31, Polycarbonate, Polyacetale, Polyester, Celluloseester, Carl Hanser Verlag München, Wien 1992, Seiten 117-299 verwiesen.

Die Herstellung erfindungsgemäß bevorzugt einzusetzender aromatischer Polycarbonate erfolgt einerseits durch Umsetzung von Diphenolen mit Kohlensäurehalogeniden, vorzugsweise Phosgen, und oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Andererseits ist eine Herstellung über ein Schmelzepolymerisationsverfahren durch Umsetzung von Diphenolen mit beispielsweise Diphenylcarbonat möglich. Für die Herstellung erfindungsgemäß einzusetzender Polycarbonate geeignete Diphenole sind vorzugsweise Hydrochinon, Resorcin, Dihydroxy-diphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, a-a'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden als Edukte Diphenole auf der Basis von Phthalimiden, insbesondere 2-Aralkyl-3,3'-Bis-(4-hydroxyphenyl)-phthalimide oder 2-Aryl-3,3'-Bis-(4-hydroxyphenyl)-phthalimide, insbesondere 2-Phenyl-3,3'-Bis-(4-hydroxyphenyl)-phthalimid, 2-Alkyl-3,3'-Bis-(4-hydroxyphenyl)-phthalimide, insbesondere 2-Butyl-3,3'-Bis-(4-hydroxyphenyl)-phthalimide, 2-Propyl-3,3'-Bis-(4-hydroxyphenyl)-phthalimide, 2-Ethyl-3,3'-Bis-(4-hydroxyphenyl)-phthalimide oder 2-Methyl-3,3'-Bis-(4-hydroxyphenyl)-phthalimide sowie Diphenole auf der Basis von am Stickstoff substituierten Isatinen, insbesondere 3,3-Bis(4-hydroxyphenyl)-1-phenyl-1H-indol-2- oder 2,2-Bis(4-hydroxyphenyl)-1-phenyl-1H-indol-3-on, eingesetzt.

### Bevorzugte Diphenole sind

4,4'-Dihydroxydiphenyl [CAS Nr. 92-88-6],
2,2-Bis-(4-hydroxyphenyl)-propan (Bisphenol A) [CAS Nr. 80-05-7],
2,4-Bis-(4-hydroxyphenyl)-2-methylbutan,
alpha,alpha-Bis-(4-hydroxyphenyl)-p-diisopropylbenzol,
2,2-Bis-(3-methyl-4-hydroxyphenyl)-propan,
Dimethyl-Bisphenol A [CAS Nr. CAS 1568-83-8],
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-p-diisopropylbenzol,
1,1-Bis-(4-hydroxyphenyl)-cyclohexan [CAS Nr. 843-55-0] und
alpha,alpha'-Bis-(4-hydroxyphenyl)-3,3,5-trimethylcyclohexan.
Besonders bevorzugte Diphenole sind
2,2-Bis-(4-hydroxyphenyl)-propan(Bisphenol A),
2,2-Bis-(3,5-dimethyl-4-hydroxyphenyl)-propan,
1,1-Bis-(4-hydroxyphenyl)-cyclohexan [CAS Nr. 843-55-0],
1,1-Bis-(4-hydroxyphenyl)-3,3,5-trimethylcyclohexan und

### Dimethyl-Bisphenol A.

Diese und weitere geeignete Diphenole sind z. B. in US-A 3 028 635**,** US-A 2 999 825**,** US-A 3 148 172**,** US-A 2 991 273**,** US-A 3 271 367**,** US-A 4 982 014 und US-A 2 999 846**, in** DE- A 1 570 703**,** DE-A 2063 050**,** DE-A 2 036 052**,** DE-A 2 211 956 und DE-A 3 832 396**,** in FR-A 1 561 518**,** in der Monographie H. Schnell, Chemistry and Physics of Polycarbonates, Interscience Publishers, New York 1964 sowie in JP-A 620391986**,** JP-A 620401986 und JP- A 1055501986 beschrieben.

Im Fall der Homopolycarbonate wird nur ein Diphenol eingesetzt, im Fall der Copolycarbonate werden mehrere Diphenole eingesetzt.

Erfindungsgemäß bevorzugt einzusetzende Kohlensäurederivate sind Phosgen oder Diphenylcarbonat. Bevorzugte Kettenabbrecher, die bei der Herstellung der Polycarbonate eingesetzt werden können, sind Monophenole. Bevorzugte Monophenole sind Phenol, Alkylphenole, insbesondere Kresole, p-tert.-Butylphenol, Cumylphenol, sowie deren Mischungen.

Bevorzugte Kettenabbrecher sind die Phenole, welche ein- oder mehrfach mit linearen oder verzweigten, substituierten oder unsubstituierten C₁-C₃₀-Alkylresten, vorzugsweise unsubstituiert, oder mit tert-Butyl substituiert sind. Besonders bevorzugte Kettenabbrecher sind Phenol, Cumylphenol und/oder p-tert-Butylphenol. Die Menge an einzusetzendem Kettenabbrecher liegt vorzugsweise im Bereich von 0,1 bis 5 Mol-%, bezogen auf die Mole an jeweils eingesetztem Diphenol. Die Zugabe der Kettenabbrecher kann vor, während oder nach der Umsetzung mit einem Kohlensäurederivat erfolgen.

Erfindungsgemäß bevorzugt einzusetzende Verzweiger sind die in der Polycarbonatchemie bekannten tri- oder mehr als trifunktionellen Verbindungen, insbesondere solche mit drei oder mehr als drei phenolischen OH-Gruppen.

### Bevorzugte Verzweiger sind

1,3,5- Tri-(4-hydroxyphenyl)-benzol,
1,1,1-Tri-(4- hydroxyphenyl)-ethan,
Tri-(4-hydroxyphenyl)-phenylmethan,
2,4-Bis-(4-hydroxyphenylisopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Tetra-(4-hydroxyphenyl)-methan,
Tetra-(4-(4-hydroxyphenylisopropyl)-phenoxy)-methan,
1,4-Bis-((4',4-dihydroxytriphenyl)-methyl)-benzol oder
3,3-Bis-(3-methyl-4-hydroxyphenyl)-2-oxo-2,3-dihydroindol.

Die Menge der gegebenenfalls einzusetzenden Verzweiger liegt vorzugsweise im Bereich von 0,05 Mol- % bis 3,00 Mol-%, bezogen auf Mole an jeweils eingesetztem Diphenol. Die Verzweiger können entweder mit den Diphenolen und den Kettenabbrechern in der wässrig alkalischen Phase vorgelegt werden, oder in einem organischen Lösungsmittel gelöst, vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Des Weiteren können auch Copolycarbonate Verwendung finden. Zur Herstellung dieser Copolycarbonate können 1 Gew.-% bis 25 Gew.- %, vorzugsweise 2,5 Gew.-% bis 25 Gew.-%, besonders bevorzugt 2,5 Gew.-% bis 10 Gew.-%, bezogen auf die Gesamtmenge an einzusetzendem Diphenol, Polydiorganosiloxane mit Hydroxyaryloxy-Endgruppen eingesetzt werden. Diese sind bekannt (US 3 419 634, **US-PS** 3 189 662, EP-A 0 122 535, US 5 227 449) bzw. nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich, das Polycarbonat oder die Mischung von Polycarbonaten gemeinsam mit einem oder mehreren von Polycarbonat verschiedenen Kunststoffen als Blendpartner einzusetzen.

Als Blendpartner werden vorzugsweise, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere oder Polyvinylchlorid eingesetzt.

In einer Ausführungsform sind vorzugsweise bis zu 10,0 Gew.-%, bevorzugt 0,10 bis 8,0 Gew.-%, besonders bevorzugt 0,2 bis 3,0 Gew.-% - bezogen auf 100 Gew.-% des als Matrix einzusetzenden Polycarbonats - sonstige übliche Additive enthalten.

Die Gruppe der optional einzusetzenden Additive umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganische Pigmente, Ruß und/oder Farbstoffe, und anorganische Füllstoffe in den für Polycarbonat üblichen Mengen. Diese Additive können einzeln oder auch im Gemisch zugesetzt werden.

Solche Additive, wie sie üblicherweise Polycarbonaten zugesetzt werden, sind beispielsweise in EP-A 0 839 623**,** WO-A 96/15102**,** EP-A 0 500 496 oder in Plastics Additives Handbook, Hans Zweifel, 5th Edition 2000, Hanser Verlag, Münch**en,** beschrieben.

### Faserverbundwerkstoff

Ein Mehrschichtverbundwerkstoff im Sinne der vorliegenden Erfindung weist mindestens drei übereinanderliegende Faserverbundwerkstofflagen auf.

Unter Faserverbundwerkstoff wird erfindungsgemäß ein Werkstoff verstanden, der Endlosfasern enthält, welche in eine Kunststoffmatrix eingebettet sind. Gemäß einer bevorzugten Ausführungsform der Erfindung weist der Mehrschichtverbundwerkstoff mindestens drei übereinanderliegende und miteinander flächig verbundene Faserverbundwerkstofflagen auf.

Die erfindungsgemäßen Faserverbundwerkstofflagen des Mehrschichtverbundwerkstoffs weisen Endlosfasern auf, die innerhalb der jeweiligen Lage beliebig ausgerichtet sind und in einem Kunststoff, vorzugsweise einem thermoplastischen Kunststoff, insbesondere einem Polycarbonat basierten Kunststoff eingebettet sind. Die Endlosfasern erstrecken sich dabei insbesondere im Wesentlichen über die gesamte Länge der Lage einer erfindungsgemäß einzusetzenden Faserverbundwerkstofflage.

Gemäß einer besonderen Ausführungsform der Erfindung sind alle Faserverbundwerkstofflagen des erfindungsgemäßen Mehrschichtverbundwerkstoffs flächig miteinander verbunden, wobei die Endlosfasern innerhalb einer jeweiligen Faserverbundwerkstofflage beliebig ausgerichtet sind und in einem Kunststoff, vorzugsweise einem thermoplastischen Kunststoff, insbesondere einem Polycarbonat basierten Kunststoff, eingebettet sind.

Optional können weitere Materiallagen zwischen den Faserverbundwerkstofflagen angeordnet sein. Neben den Faserverbundwerkstofflagen kann in einer bevorzugten Ausführungsform der erfindungsgemäße Mehrschichtverbundwerkstoff wenigstens eine weitere Materiallage zwischen den Faserverbundwerkstofflagen enthalten.

Vorzugsweise sind solche weiteren Materiallagen aus Kunststoff, der gleich oder verschieden von dem Kunststoff in den Faserverbundwerkstofflagen ist. Diese weiteren Materiallagen aus Kunststoff können insbesondere auch Füllstoffe, die von den erfindungsgemäß in den Faserverbundwerkstofflagen einzusetzenden Endlosfasern verschieden sind, enthalten. Solche weiteren Materiallagen sind vorzugsweise Klebstoffschichten, Gewebelagen oder Vlieslagen. Diese weiteren Materiallagen können vorzugsweise zwischen innenliegenden Faserverbundwerkstofflagen, zwischen innenliegenden Faserverbundwerkstofflagen und außenliegenden Faserverbundwerkstofflagen oder zwischen mehreren innenliegenden Faserverbundwerkstofflagen eingesetzt werden.

In einer Ausführungsform können diese weiteren Materiallagen, vorzugsweise in Form von Oberflächenvergütungslagen, Furnieren, Verblendungen oder Lackschichten, zusätzlich oder alternativ auf einer oder auf beiden außenliegenden Faserverbundwerkstofflagen eingesetzt werden.

In einer Ausführungsform der vorliegenden Erfindung wird nur auf einer außenliegenden Faserverbundwerkstofflage wenigstens eine weitere Materiallage aufgebracht. Vorzugsweise sind solche weiteren Materiallagen von den innenliegenden und außenliegenden Faserverbundwerkstofflagen verschiedene Faserverbundwerkstofflagen, Kunststofflagen oder Lackschichten, die keine unidirektional ausgerichteten Endlosfasern enthalten. In einer Ausführungsform handelt es sich bei solchen weiteren Materiallagen auch nicht um Faserverbundwerkstofflagen, Kunststofflagen oder Lackschichten auf Basis von Polycarbonat.

Vorzugsweise sind die außenliegenden Faserverbundwerkstofflagen und die mindestens eine innenliegende Faserverbundwerkstofflage jedoch derart miteinander verbunden, dass keine alternativen Materiallagen dazwischen angeordnet sind.

Praktische Versuche im Rahmen der vorliegenden Erfindung haben gezeigt, dass ein erfindungsgemäßer Mehrschichtverbundwerkstoff bereits vorteilhafte mechanische Eigenschaften und eine metallische Haptik und Optik ohne solche weiteren, zwischenliegenden Materiallagen aufweist.

Gemäß einer besonders bevorzugten Ausführungsform enthalten alle Faserverbundwerkstofflagen eines erfindungsgemäßen Mehrschichtverbundwerkstoffs unidirektional ausgerichtete Endlosfasern, die in einem Polycarbonat basierten Kunststoff eingebettet sind.

Der erfindungsgemäße Mehrschichtverbundwerkstoff kann in einer bevorzugten Ausführungsform auch ausschließlich aus erfindungsgemäß einzusetzenden Endlosfasern aufweisenden Faserverbundwerkstofflagen bestehen, wobei die Endlosfasern innerhalb der jeweiligen Faserverbundwerkstofflage beliebig ausgerichtet und in einem auf Polycarbonat basierten Kunststoff eingebettet sind. In einer weiteren bevorzugten Ausführungsform weist ein erfindungsgemäßer Mehrschichtverbundwerkstoff dieser Art noch auf einer oder beiden der außenliegenden Faserverbundwerkstofflagen eine oder mehrere Oberflächenvergütungslagen auf, vorzugsweise in Form wenigstens einer Verblendung, wenigstens eines Furniers (Veneer) oder wenigstens einer Lackschicht.

Es hat sich im Rahmen der vorliegenden Erfindung als vorteilhaft erwiesen, wenn der erfindungsgemäße Mehrschichtverbundwerkstoff vorzugsweise ein bis acht, besonders bevorzugt ein bis sieben, ganz besonders bevorzugt ein bis sechs, innenliegende Faserverbundwerkstofflagen umfasst. Der erfindungsgemäße Mehrschichtverbundwerkstoff kann aber auch keine oder mehr als zwölf, insbesondere dreizehn, vierzehn, fünfzehn oder mehr als sechzehn innenliegende Faserverbundwerkstofflagen umfassen.

Die einzelnen Faserverbundwerkstofflagen können im Wesentlichen gleich oder unterschiedlich aufgebaut und/oder orientiert sein, solange insgesamt eine Mittensymmetrie über die Dicke des Mehrschichtverbundwerkstoffs eingehalten wird. Unter **Mittensymmetrie** versteht ein Fachmann das Vorliegen einer Symmetrieebene parallel zu den einzelnen Faserverbundwerkstofflagen, die sich im Querschnitt genau in der Mitte des Gesamtaufbaus des erfindungsgemäßen Mehrschichtverbundwerkstoffs befindet, d.h. an der die obere Hälfte des Gesamtaufbaus gespiegelt die untere Hälfte ergibt, bzw. umgekehrt.

Unter einem im Wesentlichen gleichen Aufbau der Faserverbundwerkstofflagen wird im Rahmen der Erfindung verstanden, dass mindestens ein Merkmal aus der Gruppe chemische Zusammensetzung, Faservolumengehalt und Schichtdicke gleich ist.

Unter chemischer Zusammensetzung wird die chemische Zusammensetzung der Kunststoffmatrix des Faserverbundwerkstoffs und/oder die chemische Zusammensetzung der die Endlosfasern einbettenden Matrix verstanden.

Gemäß einer bevorzugten Ausführungsform der Erfindung sind die außenliegenden Faserverbundwerkstofflagen in Bezug auf ihre chemische Zusammensetzung, ihren Faservolumengehalt und ihre Schichtdicke im Wesentlichen gleich aufgebaut.

Als außenliegende Faserverbundwerkstofflage wird erfindungsgemäß die jeweils relativ zu den anderen Faserverbundwerkstofflagen des Mehrschichtverbundwerkstoffs am weitesten außen liegende Faserverbundwerkstofflage verstanden. Die Endlosfasern in einer außenliegenden Faserverbundwerkstofflage sind vorzugsweise unidirektional ausgerichtet. Vorzugsweise sind die Endlosfasern einer außenliegenden Faserverbundwerkstofflage in Polycarbonat basierendem Kunststoff eingebettet.

Innenliegende Faserverbundwerkstofflagen im Sinne der Erfindung sind somit alle Faserverbundwerkstofflagen, die sich zwischen den beiden außenliegenden Faserverbundwerkstofflagen befinden.

**Beliebige Orientierung** im Sinne der Erfindung bedeutet, dass die Hauptrichtungen der Endlosfasern in einer Faserverbundwerkstofflage von der Produktionsrichtung des eingesetzten textilen Halbzeugs, insbesondere in Richtung des Kettfadens bei Geweben, in der Ebene im Bereich von >0° und <90° abweichen bzw. abweichen können. Mit **unidirektional** ist im Rahmen der vorliegenden Erfindung im Wesentlichen gemeint, dass eine Abweichung der auf die zweidimensionale Ebene (Länge • Breite) bezogene Faserlaufrichtung von bis zu 5% möglich ist. Erfindungsgemäß bevorzugt beträgt die Abweichung der Faserlaufrichtung jedoch unter 3%, besonders bevorzugt unter 1 %.

Erfindungsgemäß bevorzugt einzusetzende Endlosfasern sind Glasfasern, Kohlenstofffasern, Basaltfasern, Aramidfasern, Liquid-Crystal-Polymer-Fasern, Polyphenylensulfidfasern, Polyetherketonfasern, Polyetheretherketonfasern, Polyetherimidfasern und deren Mischungen. Als besonders bevorzugt hat sich der Einsatz von Glasfasern und/oder Kohlenstofffasern, insbesondere von Glasfasern erwiesen.

Gemäß einer besonders bevorzugten Ausführungsform der Erfindung werden als Endlosfasern Kohlenstofffasern in den außenliegenden Faserverbundwerkstofflagen eingesetzt.

Für bestimmte bevorzugte Ausführungsformen der Erfindung werden Endlosfasern, insbesondere Glas basierte Endlosfasern, mit einem E-Modul von größer 60 GPa, bevorzugt größer 65 GPa, besonders bevorzugt von 70 GPa oder mehr eingesetzt. Entsprechende Endlosfasern sind beispielsweise unter der Bezeichnung Multistar^{®} von der Firma Johns Manville im Handel erhältlich. Praktische Versuche haben gezeigt, dass sich diese Glasfasern durch eine besonders gute Webbarkeit, d.h. Verarbeitbarkeit in Herstellungsprozessen für textile Halbzeuge, und somit für die Verarbeitung zu einer erfindungsgemäßen Faserverbundwerkstofflage auszeichnen.

Für bestimmte bevorzugte Ausführungsformen der Erfindung werden Endlosfasern, insbesondere Kohlenstoff basierte Endlosfasern, mit einem E-Modul von größer 220 GPa, bevorzugt größer 225 GPa, besonders bevorzugt von 230 GPa oder mehr eingesetzt. Entsprechende Kohlenstoff basierte Endlosfasern sind beispielsweise unter der Bezeichnung Torayca^{®} von der Firma Toray Carbon Fiber Europe im Handel erhältlich. Praktische Versuche haben gezeigt, dass sich diese Kohlenstofffasern durch eine besonders gute Webbarkeit, d.h. Verarbeitbarkeit in Herstellungsprozessen für textile Halbzeuge und somit für die Verarbeitung zu einer erfindungsgemäßen Faserverbundwerkstofflage auszeichnen.

Gemäß einer besonderen Ausführungsform der Erfindung sind die mindestens drei Faserverbundwerkstofflagen innerhalb des erfindungsgemäßen Mehrschichtfaserverbundwerkstoffs im Wesentlichen symmetrisch angeordnet. Im Falle dieser besonderen Ausführungsform sind die beiden außenliegenden Faserverbundwerkstofflagen in Bezug auf wenigstens ein Merkmal aus der Gruppe chemische Zusammensetzung, Faservolumengehalt oder Schichtdicke im Wesentlichen gleich aufgebaut.

**Symmetrisch** im Sinne der Erfindung bedeutet im Wesentlichen, dass die Faserverbundwerkstofflagen des Mehrschichtverbundwerkstoffs in Bezug auf eine, auf der Hälfte der durch die beiden außenliegenden Faserverbundwerkstofflagen nach außen begrenzten Dicke des Mehrschichtverbundwerkstoffs, parallel zu den Faserverbundwerkstofflagen verlaufenden Spiegelebene in Bezug auf mindestens ein Merkmal, vorzugsweise alle Merkmale aus der Gruppe chemische Zusammensetzung, Faservolumengehalt und Schichtdicke, im Wesentlichen gleich aufgebaut sind.

Gemäß einer bevorzugten Ausführungsform der Erfindung sind die mindestens drei Faserverbundwerkstofflagen symmetrisch angeordnet, wobei die beiden außenliegenden Faserverbundwerkstofflagen in Bezug auf alle Merkmale aus der Gruppe chemische Zusammensetzung, Faservolumengehalt und Schichtdicke im Wesentlichen gleich aufgebaut sind.

Gemäß einer weiteren besonders bevorzugten Ausführungsform der Erfindung sind die mindestens drei Faserverbundwerkstofflagen symmetrisch angeordnet, wobei die beiden außenliegenden Faserverbundwerkstofflagen in Bezug auf alle Merkmale aus der Gruppe chemische Zusammensetzung, Faservolumengehalt und Schichtdicke gleich aufgebaut sind.

Gemäß einer bevorzugten Ausführungsform der Erfindung weist ein erfindungsgemäßer Mehrschichtverbundwerkstoff eine Gesamtdicke im Bereich von 0,3 bis 5 mm, vorzugsweise im Bereich von 0,3 bis 3 mm, insbesondere im Bereich von 0,3 bis 2,5 mm auf. Praktische Versuche haben gezeigt, dass es mit dem erfindungsgemäßen Mehrschichtverbundwerkstoff möglich ist, selbst bei diesen geringen Dicken ausgesprochen gute mechanische Eigenschaften zu erzielen.

Dabei hat es sich als besonders vorteilhaft erwiesen, wenn die Summe aller innenliegenden Faserverbundwerkstofflagen eine Gesamtdicke im Bereich von 0,05 bis 4,6 mm, bevorzugt im Bereich von 0,1 bis 2,6 mm, besonders bevorzugt im Bereich von 0,4 bis 1,2 mm, aufweist.

Vorteilhaft im Rahmen der Erfindung ist es ferner, wenn die Dicke jeder einzelnen der beiden außenliegenden Faserverbundwerkstofflagen jeweils im Bereich von 0,02 bis 1 mm, bevorzugt im Bereich von 0,1 bis 0,5 mm, besonders bevorzugt im Bereich von 0,15 bis 0,3 mm liegt.

In Bezug auf die mechanischen Eigenschaften wurde im Rahmen der Erfindung überraschend festgestellt, dass sich besonders gute Ergebnisse einstellen, wenn der erfindungsgemäße Mehrschichtverbundwerkstoff ein Dickenverhältnis der Summe der beiden außenliegenden Faserverbundwerkstofflagen zur Summe aller innenliegenden Faserverbundwerkstofflagen von 1 bis 2,5 aufweist.

Überraschenderweise wurde festgestellt, dass ein Polycarbonat basierter Mehrschichtverbundwerkstoff, der dieses vorgenannte Dickenverhältnis der Summe der beiden außenliegenden Faserverbundwerkstofflagen zu der Summe aller innenliegenden Faserverbundwerkstofflagen im Vergleich zu einem Polycarbonat basierten Mehrschichtverbundwerkstoff, der dieses Dickenverhältnis nicht aufweist, deutlich verbesserte mechanische Eigenschaften zeigt. So ist es insbesondere möglich, mit dem vorgenannten Dickenverhältnis Polycarbonat basierte Mehrschichtverbundwerkstoffe zu erhalten, die bei Messungen gemäß der im experimentellen Teil beschriebenen Methode sowohl in 0° als auch in 90° ein für die weitere Verwendung als Gehäuseteil für elektronische Geräte ausreichend und insbesondere um weniger als 5% voneinander abweichende Biege-E-Moduln aufweisen.

Gemäß einer besonderen Ausführungsform der Erfindung weist eine Faserverbundwerkstofflage einen Faservolumengehalt im Bereich von 30 Vol.-% bis 80 Vol.-%, vorzugsweise im Bereich von 35 Vol.-% bis 65 Vol.-%, besonders bevorzugt im Bereich von 37 Vol.-% bis 52 Vol.-% auf. Ausprüfungen im Rahmen der vorliegenden Erfindung zeigten, dass bei einem Faservolumengehalt von weniger als 30 Vol.-% die mechanischen Eigenschaften des resultierenden Faserverbundwerkstoffs bei punktueller Belastung oftmals nicht optimal sind, d.h. der Faserverbundwerkstoff kann einer punktuellen Belastung nicht genügend standhalten und teils sogar durchstoßen werden. Die Ausprüfungen im Rahmen der vorliegenden Erfindung zeigten ferner, dass ein Faservolumengehalt von über 80 Vol.-% ebenfalls zu einer Verschlechterung der mechanischen Eigenschaften des Faserverbundwerkstoffs führte. Vermutlich werden die Fasern bei derartig hohem Faservolumengehalt bei der Imprägnierung nicht mehr ausreichend benetzt, was zu einer Zunahme an Lufteinschlüssen und zu einem vermehrten Auftreten von Oberflächendefekten im Mehrschichtverbundwerkstoff führt.

Gemäß einer Ausführungsform der Erfindung weisen die außenliegenden Faserverbundwerkstofflagen vorzugsweise einen Faservolumengehalt von höchstens 60 Vol.%, besonders bevorzugt von höchstens 55 Vol.-%, insbesondere bevorzugt von höchstens 51 Vol.-% auf.

Gemäß einer Ausführungsform der Erfindung weisen die außenliegenden Faserverbundwerkstofflagen vorzugsweise einen Faservolumengehalt von mindestens 30 Vol.-%, besonders bevorzugt von mindestens 35 Vol.-%, insbesondere bevorzugt von mindestens 37 Vol.-% auf.

Die innenliegenden Faserverbundwerkstofflagen weisen vorzugsweise einen Faservolumengehalt im Bereich von 30 Vol.-% bis 80 Vol.-%, besonders bevorzugt im Bereich von 35 Vol.-% bis 65 Vol.-%, ganz besonders bevorzugt im Bereich von 37 Vol.-% bis 52 Vol.-% bezogen auf das Gesamtvolumen der Faserverbundwerkstofflagen auf.

Unter Vol.-% wird im Rahmen der vorliegenden Erfindung der Volumenanteil (% v/v) bezogen auf das Gesamtvolumen der jeweiligen Faserverbundwerkstofflage verstanden.

Als besonders praxisgerecht hat es sich erwiesen, wenn die innenliegenden Faserverbundwerkstofflagen gleich orientiert sind und ihre Orientierung relativ zu den außenliegenden Faserverbundwerkstofflagen um 0° rotiert ist. Es ist aber auch denkbar, die innen- liegenden Faserverbundwerkstofflagen relativ zu den außenliegenden Faserverbundwerkstofflagen um 30°, 40°, 50°, 60°, 70° oder 90° zu rotieren. Dabei kann die Orientierung in jedem Fall um ±5°, bevorzugt um ±3°, besonders bevorzugt um ±1 ° von den genannten Richtwerten abweichen.

Die Faserverbundwerkstofflagen eines erfindungsgemäßen Mehrschichtverbundwerkstoffs können mit den üblichen dem Fachmann bekannten Verfahren zur Herstellung von Faserverbundwerkstoffen hergestellt werden.

Besonders gute Ergebnisse im Hinblick auf die mechanischen Eigenschaften und die Oberflächenglätte stellen sich ein, wenn folgendes Herstellungsverfahren angewendet wird: Gemäß einer bevorzugten Ausführungsform der Erfindung sind die Faserverbundwerkstofflagen des Mehrschichtverbundwerkstoffs herstellbar durch Auftragen eines Kunststoff, vorzugsweise eines thermoplastischen Kunststoffs, insbesondere eines Polycarbonat basierten Kunststoffs, auf ein Endlos-Faserband oder Textil unter Druck- und Temperaturbeaufschlagung. Ein derartiges Herstellungsverfahren ist in EP 0131879 A1 oder EP 0212232 A2 beschrieben.

Überraschend wurde gefunden, dass sich die so hergestellten Faserverbundwerkstofflagen trotz der Verwendung spannungsrissanfälliger Kunststoffe, insbesondere Polycarbonat, durch einen besonders geringen Anteil von Lufteinschlüssen und sehr gute mechanische Eigenschaften auszeichnen. Der aus den so hergestellten Faserverbundwerkstofflagen erhältliche erfindungsgemäße Mehrschichtverbundwerkstoff weist neben metallischer Haptik und Optik ferner sehr gute mechanische Eigenschaften, insbesondere im Hinblick auf punktuelle Belastungen, auf.

Bevorzugt weisen die mindestens drei Faserverbundwerkstofflagen des erfindungsgemäßen Mehrschichtverbundwerkstoffs im Wesentlichen keine Hohlräume, insbesondere im Wesentlichen keine Lufteinschlüsse, auf.

**Im Wesentlichen keine Hohlräume** bedeutet gemäß einer Ausführungsform, dass der Hohlraumgehalt der mindestens drei Faserverbundwerkstofflagen des erfindungsgemäßen Mehrschichtverbundwerkstoffs unter 2 Vol.-%, insbesondere unter 1 Vol.-%, besonders bevorzugt unter 0,5 Vol.- %, beträgt.

Die Ermittlung des Hohlraumgehalts einer Faserverbundwerkstofflage oder des Mehrschichtverbundwerkstoffs erfolgte im Rahmen der vorliegenden Erfindung nach der Dickendifferenzmethode. Hierbei wird die Schichtdickendifferenz zwischen theoretischer Bauteildicke und der tatsächlichen Bauteildicke bei bekannten Flächengewichten und Dichten von Kunststoff sowie Faser ermittelt. Bei der Berechnung der theoretischen Bauteildicken wird davon ausgegangen, dass keine Hohlräume in dem Faserverbundwerkstoffaufbau vorhanden sind und eine vollständige Benetzung der Fasern mit Polymer vorliegt. Der Bezug der Dickendifferenz auf die tatsächliche Bauteildicke ergibt den prozentualen Hohlraumgehalt. Die Messung der Dicken kann vorzugsweise mit einer Bügelmessschraube erfolgen. Fehlerminimierte Ergebnisse lassen sich bei dieser Methode bevorzugt durch die Ermittlung des Hohlraumgehalts in Bauteilen bestehend aus mehreren Faserverbundwerkstofflagenbevorzugt mehr als 4 Faserverbundwerkstofflagen, besonders bevorzugt mehr als 6 Faserverbundwerkstofflagen und ganz besonders bevorzugt mehr als 8 Faserverbundwerkstofflagen, bestimmen.

Ganz besonders bevorzugt weisen die wenigstens drei Faserverbundwerkstofflagen eines erfindungsgemäßen Mehrschichtverbundwerkstoffs keine Hohlräume, insbesondere keine Lufteinschlüsse, auf.

Erfindungsgemäß bevorzugt sind deshalb Mehrschichtverbundwerkstoffe worin
- 3 bis 25 Faserverbundwerkstofflagen, bevorzugt 3 bis 20 Faserverbundwerkstofflagen, besonders bevorzugt 3 bis 18 Faserverbundwerkstofflagen,
- wobei die Faserverbundwerkstofflagen jeweils ein Flächengewicht im Bereich von 5 g/m² bis 3000 g/m², bevorzugt im Bereich von 100 g/m² bis 900 g/m², besonders bevorzugt im Bereich von 150 g/m² bis 750 g/m², aufweisen,
- und die Gesamtheit aller Faserverbundwerkstofflagen mit wenigstens einem Kunststoff, vorzugsweise Polycarbonat, mit einem MVR nach ISO 1133 im Bereich von 1 cm³/10 min bis 100 cm³/10 min imprägniert ist,
- und die außenliegenden Faserverbundwerkstofflagen einen nach DIN 1310 zu bestimmenden Faservolumengehalt von höchstens 60 Vol.%, vorzugsweise von höchstens 55 Vol.-%, insbesondere von höchstens 51 Vol.-% aufweisen,
- und die außenliegenden Faserverbundwerkstofflagen einen nach DIN 1310 zu bestimmenden Faservolumengehalt von wenigstens 30 Vol.-%, vorzugsweise von wenigstens 35 Vol.-%, insbesondere bevorzugt von wenigstens 37 Vol.-% aufweisen,
- und die innenliegenden Faserverbundwerkstofflagen einen nach DIN 1310 zu bestimmenden Faservolumengehalt < 80 Vol.-%, vorzugsweise < 65 Vol.-%, besonders bevorzugt < 52 Vol.-% bezogen auf das Gesamtvolumen der innenliegenden Faserverbundwerkstofflagen aufweisen,
- und die innenliegenden Faserverbundwerkstofflagen einen nach DIN 1310 zu bestimmenden Faservolumengehalt > 30 Vol.-%, vorzugsweise > 35 Vol.-%, besonders bevorzugt von > 37 Vol.-% bezogen auf das Gesamtvolumen der innenliegenden Faserverbundwerkstofflagen aufweisen, und
- und der Mehrschichtverbundwerkstoff einen Hohlraumanteil von weniger als 2 Vol.-%, vorzugsweise weniger als 1 Vol.-%, insbesondere bevorzugt weniger als 0,5 Vol.-%, aufweist,
und die Endlosfasern in Form eines textilen Halbzeugs, vorzugsweise in Form eines balancierten Gewebes Vlieses oder Fasermatte, vorliegen, wobei die Endlosfasern innerhalb der jeweiligen Faserverbundwerkstofflage beliebig orientiert sind,
mit der Maßgabe, dass
a) bei einer innenliegenden Faserverbundwerkstofflage diese zu den beiden äußeren Faserverbundwerkstofflagen um 0° bis 90° rotiert ist,
b) bei ≥2 innenliegenden Faserverbundwerkstofflagen diese innenliegenden Faserverbundwerkstofflagen im Wesentlichen gleich orientiert sind und ihre Orientierung zu den außenliegenden Faserverbundwerkstofflagen um 0° bis 90° rotiert ist,
und die Orientierung einer Faserverbundwerkstofflage durch die Orientierung des die Endlosfasern enthaltenden textilen Halbzeugs festgelegt wird, als thermoplastischer Kunststoff wenigstens einer aus der Gruppe bestehend aus Polycarbonaten, Polybutylenterephthalaten, Styrol-Acrylnitrilen, Polystyrolen, Polyetheretherketonen, Polyetherimiden, Polysulfonen, thermoplastischen Elastomeren, Polyphenylensulfiden und deren Mischungen, insbesondere Polycarbonat, eingesetzt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet.

Erfindungsgemäß besonders bevorzugt sind Mehrschichtverbundwerkstoffe worin zusätzlich die Summe aller innenliegenden Faserverbundwerkstofflagen eine Gesamtdicke im Bereich von 0,05 bis 4,6mm, bevorzugt im Bereich von 0,1 bis 2,6mm, besonders bevorzugt im Bereich von 0,4 bis 1,8mm, aufweist.

Erfindungsgemäß ganz besonders bevorzugt sind Mehrschichtverbundwerkstoffe worin zusätzlich die Dicke jeder einzelnen der beiden außenliegenden Faserverbundwerkstofflagen jeweils 0,02 bis 1mm, bevorzugt jeweils 0,1 bis 0,5mm, besonders bevorzugt jeweils 0,15 bis 0,3mm beträgt.

### Verfahren zur Herstellung einer Faserverbundwerkstofflage

Das bevorzugte Verfahren zur Herstellung einer **Faserverbundwerkstofflage** des erfindungsgemäßen Thermoplast basierten Mehrschichtfaserverbundwerkstoffs umfasst insbesondere die folgenden Schritte:
(i) Bereitstellen eines textilen Halbzeugs und Fördern dieses textilen Halbzeugs längs eines Bearbeitungsweges,
(ii) Auftragen des Kunststoffs, vorzugsweise des auf Polycarbonat basierten Kunststoffs, über die gesamte Breite des textilen Halbzeugs auf einer Oberfläche dieses textilen Halbzeugs,
(iii) Zusammenführen der erforderlichen Anzahl von mit Kunststoff beaufschlagten textilen Halbzeuge in übereinanderliegender Form und deren gleichzeitiges Fördern längs eines gemeinsamen Bearbeitungswegs,
(iv) Aufbringen eines Drucks auf die übereinanderliegenden, mit Kunststoff beaufschlagten textilen Halbzeuge senkrecht zur Ebene der textilen Halbzeuge wobei das Druckaufbringen mit mindestens einem Druckstempel bei gleichzeitiger Temperaturbeaufschlagung des Druckstempels mit einer Längsbewegungskomponente in der Bandebene und quer zu einer Textilhalbzeuglagen-Laufrichtung mittels einer statischen beheizten Presse erfolgt, vorzugsweise mittels beheizbarer Intervallheizpresse oder beheizbarer Doppelbandpresse, besonders bevorzugt mittels einer beheizbaren Doppelbandpresse,
(v) gleichzeitiges Halten des mehrlagigen Aufbaus der mit Kunststoff beauftragen Textilhalbzeuglagen innerhalb eines Bearbeitungstemperaturbereiches oberhalb der Glasübergangstemperatur des einzusetzenden Kunststoffs, und
(vi) Absenken des Bearbeitungstemperaturbereichs, vorzugsweise vor dem Abschluss der Druckbelastung.

Der Einsatz von Intervallheizpressen, verschiedentlich auch als Intervallheißpressen bezeichnet, in der Fertigung von Composites ist dem Fachmann bekannt aus EP 3257893 A1**.** Doppelbandpressen sind dem Fachmann bekannt aus EP 0131879 A1**.**

Ein Polymerauftrag von Kunststoff, vorzugsweise von Polycarbonat basiertem Kunststoff, mit nachfolgender Druck- /Temperaturbeaufschlagung, solange der Druck mit einer Temperatur kombiniert wird, die oberhalb der Glasübergangstemperatur des eingesetzten Kunststoffs liegt, führt zu einem wirksamen Einarbeiten der Kunststoffschmelze in die gesamte Faservolumenstruktur des textilen Halbzeugs.

Vorzugsweise liegt die Temperatur während der Druckbeaufschlagung, bezogen auf die Glasübergangstemperatur des Kunststoffs, im Bereich von +50°C bis +300°C, besonders bevorzugt im Bereich von +80°C bis +200°C, ganz besonders bevorzugt im Bereich von +120°C bis +180°C, insbesondere bevorzugt bei +150°C.

Vorzugsweise liegt die Temperatur während der Druckbeaufschlagung mit Polycarbonat basiertem Kunststoff im Bereich von +50°C bis +300°C, besonders bevorzugt im Bereich von +80°C bis +200°C, ganz besonders bevorzugt im Bereich von +120°C bis +180°C, insbesondere bevorzugt bei +150°C.

Wenn hier von Erhitzen über die Glasübergangstemperatur des Kunststoffs oder Halten über der Glasübergangstemperatur des Kunststoffs die Rede ist, so ist damit das Erhitzen auf eine Temperatur gemeint, bei der der Kunststoff vollständig geschmolzen vorliegt. Die Glasübergangstemperatur oder Glasübergangstemperatur des Kunststoffs wird im Rahmen der vorliegenden Erfindung mittels DIN EN ISO 17025 bestimmt.

Durch die Längsbewegung während der Druck- / Temperaturbeaufschlagung werden Gasvolumina, die sich noch innerhalb des textilen Halbzeugs befinden, effizient ausgetrieben. Das Verfahren wird vorzugsweise kontinuierlich durchgeführt. Das Halten des mehrlagigen Aufbaus bei einer Temperatur oberhalb der polymerspezifischen Glasübergangstemperatur des Kunststoffs, vorzugsweise des Polycarbonat basierten Kunststoffs, stellt sicher, dass der Kunststoff nicht unerwünscht vor dem vollständigen Eindringen innerhalb und auf dem textilen Halbzeug erstarrt. Nach dem Durchführen der angegebenen Verfahrensschritte ist der hergestellte, imprägnierte mehrlagige Aufbau definiert abgekühlt. Das textile Halbzeug kann eine Vielzahl von Endlosfasern aufweisen. Aufgrund der Druck-/Temperaturbeaufschlagung kann eine geringe bis nicht vorhandene Schädigung der Fasern bei guter Kunststoffdurchdringung des textilen Halbzeugs, also bei guter Imprägnierung, realisiert werden.

Besonders bevorzugt wird das Verfahren zur Herstellung einer Faserverbundwerkstofflage eines erfindungsgemäßen Mehrschichtverbundwerkstoffs so geführt, dass das Auftragen des Kunststoffs, vorzugsweise des Polycarbonat basierten Kunststoffs, auf das textile Halbzeug erfolgt, während das textile Halbzeug unter Normal-Umgebungsdruck gefördert wird. Ein solches Auftragen des Kunststoffs vermeidet eine aufwändige Abdichtung einer unter Druck stehenden Auftragskammer nach außen.

Vorzugsweise liegt der Druck während der Druck-/Temperaturbeaufschlagung im Bereich von 0,01 MPa bis 3 MPa.

### Verfahren zur Herstellung eines Mehrschichtfaserverbundwerkstoffs

Unter dem Zusammenführen der geschichteten Faserverbundwerkstofflagen zum Mehrschichtverbundwerkstoff wird erfindungsgemäß jedes Verfahren verstanden, welches eine körperliche Verbindung der geschichteten Faserverbundwerkstofflagen zur Folge hat.

Die vorliegende Erfindung betrifft deshalb auch ein Verfahren zur Herstellung eines Mehrschichtverbundwerkstoffs, umfassend folgende Schritte:
(I) Bereitstellen wenigstens einer innenliegenden Faserverbundwerkstofflage und zweier außenliegender Faserverbundwerkstofflagen,
(II) Einlegen der wenigstens einen innenliegenden Faserverbundwerkstofflage zwischen die außenliegenden Faserverbundwerkstofflagen,
(III) Verbinden der geschichteten Faserverbundwerkstofflagen, insbesondere mittels Druck und/oder Temperatur durch wenigstens eine statische beheizte Presse, vorzugsweise einer beheizbaren Intervallheizpresse oder beheizbaren Doppelbandpresse, besonders bevorzugt mittels einer beheizbaren Doppelbandpresse,
mit der Maßgabe, dass jede dieser mindestens drei innenliegenden und außenliegenden Faserverbundwerkstofflagen Endlosfasern in Form eines textilen Halbzeugs, vorzugsweise in Form eines balancierten Gewebes, Vlieses oder Fasermatte, enthält, wobei die Endlosfasern innerhalb der jeweiligen Faserverbundwerkstofflage beliebig ausgerichtet sind und in thermoplastischem Kunststoff, vorzugsweise Polycarbonat basierten Kunststoff, eingebettet sind, wobei
a) bei einer innenliegenden Faserverbundwerkstofflage diese zu den beiden äußeren Faserverbundwerkstofflagen um 0° bis 90° rotiert ist,
b) bei ≥2 innenliegenden Faserverbundwerkstofflagen diese innenliegenden Faserverbundwerkstofflagen im Wesentlichen gleich orientiert sind und ihre Orientierung zu den außenliegenden Faserverbundwerkstofflagen um 0° bis 90° rotiert ist,
und die Orientierung einer Faserverbundwerkstofflage durch die Orientierung des die Endlosfasern enthaltenden textilen Halbzeugs festgelegt wird.

Gemäß einer bevorzugten Ausführungsform resultiert das Zusammenführen der geschichteten Faserverbundwerkstofflagen in flächig miteinander verbundenen Faserverbundwerkstofflagen. **Flächig verbunden** bedeutet dabei, dass wenigstens 50%, vorzugsweise wenigstens 75%, oder vorzugsweise wenigstens 90%, oder vorzugsweise wenigstens 95%, oder vorzugsweise wenigstens 99%, oder 100% ("vollflächige" Verbindung) der einander zugewandten Oberflächen zweier benachbarter Faserverbundwerkstofflagen miteinander unmittelbar verbunden sind. Der Grad der Verbindung kann mikroskopisch in Querschnitten bestimmt werden, oder auch durch die Abwesenheit von Hohlräumen, insbesondere Lufteinschlüssen im Faserverbundwerkstoff bestimmt werden.

Vorzugsweise erhält man nach dem erfindungsgemäßen Verfahren quasi-isotrope Mehrschichtverbundwerkstoffe mit einer E-Modul Kombination in 0° Richtung von größer 30 GPa und in 90° Richtung von größer 30 GPa, d.h. einem annähernd isotropen und damit metallischem Materialverhalten. Besonders bevorzugt weist ein erfindungsgemäßer Mehrschichtverbundwerkstoff eine E-Modul Kombination in 0° Richtung von größer 35 GPa und in 90° Richtung von größer 35 GPa auf.

### Verfahren zur Herstellung eines Mehrschichtverbundwerkstoffgehäuses

Zur Herstellung eines Gehäuses, insbesondere eines Gehäuses für elektrische oder elektronische Geräte, werden die folgenden Schritte durchgeführt:
(i) Bereitstellen eines erfindungsgemäßen Mehrschichtverbundwerkstoffs als Ausgangsmaterial,
(ii) Umformung und/oder Assemblierung mit weiteren Komponenten zum Gehäuseteil.

Die Erfindung betrifft deshalb auch ein Verfahren zur Herstellung eines Herstellung eines Gehäuses, insbesondere eines Gehäuses für elektrische oder elektronische Geräte, durch
(i) Bereitstellen wenigstens eines Mehrschichtverbundwerkstoffs (1), umfassend mindestens drei übereinander liegende Faserverbundwerkstofflagen (2) und (3), die relativ zueinander definiert werden als zwei außenliegende Faserverbundwerkstofflagen (3) und mindestens eine innenliegende Faserverbundwerkstofflage (2), wobei
   jede dieser mindestens drei Faserverbundwerkstofflagen (2) und (3), Endlosfasern (4) in Form eines textilen Halbzeugs enthält, wobei die Endlosfasern (4) innerhalb der jeweiligen Faserverbundwerkstofflage (2) oder (3) beliebig orientiert sind und in thermoplastischem Kunststoff (5) eingebettet sind,
   mit der Maßgabe, dass
      a) die mindestens eine innenliegende Faserverbundwerkstofflage (2) zu den außenliegenden Faserverbundwerkstofflagen (3) um 0° bis 90° rotiert ist,
      b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
   wobei die Orientierung einer Faserverbundwerkstofflage (2) oder (3) durch die Orientierung des die Endlosfasern enthaltenden textilen Halbzeugs festgelegt wird,
   als thermoplastischer Kunststoff wenigstens einer aus der Gruppe bestehend aus Polycarbonaten, Polybutylenterephthalaten, Styrol-Acrylnitrilen, Polystyrolen, Polyetheretherketonen, Polyetherimiden, Polysulfonen, thermoplastischen Elastomeren, Polyphenylensulfiden und deren Mischungen, insbesondere Polycarbonat, eingesetzt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet, und
(ii) Umformung und/oder Assemblierung mit weiteren Komponenten.

Bevorzugt ist ein Verfahren worin das textile Halbzeug ein balanciertes Gewebe, Vlies oder eine Fasermatte ist.

Bevorzugt ist ein Verfahren bei dem das Dickenverhältnis der Summe der beiden außenliegenden Faserverbundwerkstofflagen (3) zur Summe aller innenliegenden Faserverbundwerkstofflagen (2) im Bereich von 0,25 bis 5 liegt.

Bevorzugt ist ein Verfahren worin die Faserverbundwerkstofflagen (2) und (3) erhältlich sind durch Auftragen des geschmolzenen, thermoplastischen Kunststoffs auf ein über die Glasübergangstemperatur des einzusetzenden Kunststoffs vorgeheiztes Rohtextil.

Bevorzugt ist ein Verfahren worin der Faservolumengehalt der außenliegenden Faserverbundwerkstofflagen (3) höchstens 60 Vol.-%, bezogen auf das Volumen der außenliegenden Faserverbundwerkstofflagen (3) beträgt.

Bevorzugt ist ein Verfahren bei dem die mindestens drei Faserverbundwerkstofflagen (2) und (3) im Wesentlichen symmetrisch angeordnet sind, wobei die beiden außenliegenden Faserverbundwerkstofflagen (3) in Bezug auf wenigstens ein Merkmal aus der Gruppe chemische Zusammensetzung, Faservolumengehalt und Schichtdicke im Wesentlichen gleich aufgebaut sind.

Bevorzugt ist ein Verfahren worin der Mehrschichtverbundwerkstoff (1) eine Gesamtdicke von 0,3 bis 2,5 mm aufweist.

Bevorzugt ist ein Verfahren worin der Mehrschichtverbundwerkstoff (1) ein bis acht innenliegende Faserverbundwerkstofflagen (2) umfasst.

Bevorzugt ist ein Verfahren worin die mindestens drei Faserverbundwerkstofflagen (2) und (3) im Wesentlichen keine Hohlräume, insbesondere im Wesentlichen keine Lufteinschlüsse, aufweisen.

Bevorzugt ist ein Verfahren bei dem die Endlosfasern (4) ausgewählt sind aus der Gruppe bestehend aus Glasfasern, Carbonfasern, Basaltfasern, Aramidfasern, Liquid-crystal-Polymer-Fasern, Polyphenylensulfid-Fasern, Polyetherketon-Fasern, Polyetheretherketon-Fasern, Polyetherimid-Fasern und deren Mischungen, insbesondere Glasfasern und/oder Carbonfasern.

Bevorzugte Gehäuse sind Gehäuse oder Gehäuseteile für die Rückseite eines Mobiltelefons, für die Unterseite eines Laptops, für die Monitorrückseite eines Laptops, für die Rückseite eines Tablets, etc. oder aber auch nur Bestandteil einer Rückseite eines Mobiltelefons, einer Unterseite eines Laptops, einer Monitorrückseite eines Laptops, einer Rückseite eines Tablets, etc. Vorzugsweise ist das erfindungsgemäße Mehrschichtverbundwerkstoffgehäuse die Monitorrückseite (sogenanntes "a-cover") oder die Unterseite eines Laptops (sogenanntes "d-cover") oder ein Bestandteil der Monitorrückseite oder der Unterseite eines Laptops.

Die Erfindung betrifft deshalb vorzugsweise ein elektronisches Gerät oder Gehäuseteil, enthaltend wenigstens einen erfindungsgemäßen Mehrschichtverbundwerkstoff. Vorzugsweise handelt es sich bei dem elektronischen Gerät um einen Monitor, ein Tablet, ein Laptop, ein Mobiltelefon oder um einen Computer, insbesondere um ein Laptop. Vorzugsweise handelt es sich bei dem Gehäuse eines elektronischen Geräts um die Monitorrückseite (a) oder die Unterseite (d) eines Laptops.

Ein weiterer Vorteil des erfindungsgemäßen Mehrschichtverbundwerkstoffs ist, dass er in beliebige Formen umgeformt werden kann. Zur Umformung können alle dem Fachmann bekannten Umformungsverfahren eingesetzt werden. Solche Umformungsverfahren können unter Druck- und/oder Wärmeeinwirkung erfolgen.

Gemäß einer Ausführungsform des erfindungsgemäßen Verfahrens erfolgt die Umformung unter Wärmeeinwirkung, insbesondere durch Thermoformierung.

Ein weiterer Gegenstand der Erfindung ist ein Gehäuseteil, welches geeignet ist für die Verwendung als oder für den Einsatz in einem Gehäuse eines elektronischen Geräts, wobei das Gehäuseteil einen erfindungsgemäßen Mehrschichtverbundwerkstoff enthält oder nach dem erfindungsgemäßen Verfahren zur Herstellung eines Gehäuseteils erhältlich ist und wobei das Gehäuse eines elektronischen Geräts, vorzugsweise die Monitorrückseite oder die Unterseite eines Laptops, darstellt.

Ferner ist Gegenstand der vorliegenden Erfindung ein elektronisches Gerät, insbesondere ein Computer, Monitor, Tablet oder Telefon, enthaltend einen erfindungsgemäßen Mehrschichtverbundwerkstoff oder erhältlich nach einem Verfahren zur Herstellung eines Gehäuseteils, wobei der Computer vorzugsweise ein Laptop ist.

Um als Gehäuse eines elektronischen Geräts verwendet zu werden oder in einem Gehäuse eines elektronischen Geräts eingesetzt zu werden, sollte der erfindungsgemäße Mehrschichtverbundwerkstoff einer punktuellen Belastung, wie sie beispielsweise beim Herunterfallen eines elektronischen Geräts oder dem unbeabsichtigten Betreten erzeugt wird, standhalten können. Die erfindungsgemäßen Mehrschichtverbundwerkstoffe weisen nicht nur ein überraschend metallisches Aussehen, metallischen Klang und eine metallische Haptik auf, sondern widerstehen auch besonders gut punktuellen Belastungen. Dies macht sie insbesondere für den Einsatz in portablen IT-Gehäusen besonders geeignet.

Überraschenderweise wurde gefunden, dass ein erfindungsgemäßer Mehrschichtverbundwerkstoff mit einer E-Modul Kombination in 0° Richtung von größer 30 GPa und in 90° Richtung von größer 30 GPa, d.h. einem annähernd isotropen und damit metallischen Materialverhalten, besonders gut die an ein Gehäuse eines elektronischen Geräts gestellten Anforderungen der punktuellen Belastbarkeit erfüllt. Bevorzugt weist ein erfindungsgemäßer Mehrschichtverbundwerkstoff eine E-Modul Kombination in 0° Richtung von größer 35 GPa und in 90° Richtung von größer 35 GPa auf. Wie in den Ausführungsbeispielen veranschaulicht, kann man diese Auswahlregel v.a. durch Einstellung der relativen Schichtdicken im Mehrschichtverbundwerkstoff und/oder der Faservolumengehalte steuern.

Die Erfindung betrifft deshalb auch die Verwendung erfindungsgemäßer Mehrschichtverbundwerkstoffe (1) zur Herstellung von Gehäusen, insbesondere Gehäuse für elektrische oder elektronische Geräte, durch
(i) Bereitstellen wenigstens eines Mehrschichtverbundwerkstoffs (1), umfassend mindestens drei übereinander liegende Faserverbundwerkstofflagen (2) und (3), die relativ zueinander definiert werden als zwei außenliegende Faserverbundwerkstofflagen (3) und mindestens eine innenliegende Faserverbundwerkstofflage (2), wobei
   jede dieser mindestens drei Faserverbundwerkstofflagen (2) und (3), Endlosfasern (4) in Form eines textilen Halbzeugs enthält, wobei die Endlosfasern (4) innerhalb der jeweiligen Faserverbundwerkstofflage (2) oder (3) beliebig orientiert sind und in thermoplastischem Kunststoff (5) eingebettet sind,
      mit der Maßgabe, dass
         a) die mindestens eine innenliegende Faserverbundwerkstofflage (2) zu den außenliegenden Faserverbundwerkstofflagen (3) um 0° bis 90° rotiert ist,
         b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
      wobei die Orientierung einer Faserverbundwerkstofflage (2) oder (3) durch die Orientierung des die Endlosfasern enthaltenden textilen Halbzeugs festgelegt wird,
   als thermoplastischer Kunststoff wenigstens einer aus der Gruppe bestehend aus Polycarbonaten, Polybutylenterephthalaten, Styrol-Acrylnitrilen, Polystyrolen, Polyetheretherketonen, Polyetherimiden, Polysulfonen, thermoplastischen Elastomeren, Polyphenylensulfiden und deren Mischungen, insbesondere Polycarbonat, eingesetzt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet, und
(ii) Umformung und/oder Assemblierung mit weiteren Komponenten.

Bevorzugt ist eine Verwendung worin das textile Halbzeug ein balanciertes Gewebe, Vlies oder eine Fasermatte ist.

Bevorzugt ist eine Verwendung bei der das Dickenverhältnis der Summe der beiden außenliegenden Faserverbundwerkstofflagen (3) zur Summe aller innenliegenden Faserverbundwerkstofflagen (2) im Bereich von 0,25 bis 5 liegt.

Bevorzugt ist eine Verwendung worin die Faserverbundwerkstofflagen (2) und (3) erhältlich sind durch Auftragen des geschmolzenen, thermoplastischen Kunststoffs auf ein über die Glasübergangstemperatur des einzusetzenden Kunststoffs vorgeheiztes Rohtextil.

Bevorzugt ist eine Verwenudng worin der Faservolumengehalt der außenliegenden Faserverbundwerkstofflagen (3) höchstens 60 Vol.-%, bezogen auf das Volumen der außenliegenden Faserverbundwerkstofflagen (3) beträgt.

Bevorzugt ist eine Verwendung bei der die mindestens drei Faserverbundwerkstofflagen (2) und (3) im Wesentlichen symmetrisch angeordnet sind, wobei die beiden außenliegenden Faserverbundwerkstofflagen (3) in Bezug auf wenigstens ein Merkmal aus der Gruppe chemische Zusammensetzung, Faservolumengehalt und Schichtdicke im Wesentlichen gleich aufgebaut sind.

Bevorzugt ist eine Verwendung worin der Mehrschichtverbundwerkstoff (1) eine Gesamtdicke von 0,3 bis 2,5 mm aufweist.

Bevorzugt ist eine Verwendung worin der Mehrschichtverbundwerkstoff (1) ein bis acht innenliegende Faserverbundwerkstofflagen (2) umfasst.

Bevorzugt ist eine Verwendung worin die mindestens drei Faserverbundwerkstofflagen (2) und (3) im Wesentlichen keine Hohlräume, insbesondere im Wesentlichen keine Lufteinschlüsse, aufweisen.

Bevorzugt ist eine Verwendung bei der die Endlosfasern (4) ausgewählt sind aus der Gruppe bestehend aus Glasfasern, Carbonfasern, Basaltfasern, Aramidfasern, Liquid-crystal-Polymer-Fasern, Polyphenylensulfid-Fasern, Polyetherketon-Fasern, Polyetheretherketon-Fasern, Polyetherimid-Fasern und deren Mischungen, insbesondere Glasfasern und/oder Carbonfasern.

Zur Erfindung gehört auch eine Faserverbundwerkstofflage, umfassend unidirektional ausgerichtete, in einem auf Polycarbonat basierten Kunststoff eingebettete Endlosfasern. Dabei ist der auf Polycarbonat basierende Kunststoff vorzugsweise ein lineares Polycarbonat und die unidirektional ausgerichteten Endlosfasern weisen vorzugsweise ein E-Modul von größer 220 GPa auf. Praktische Versuche an Polycarbonat haben gezeigt, dass sich derartige Faserverbundwerkstofflagen besonders gut zu erfindungsgemäßen Mehrschichtverbundwerkstoffen mit ausgesprochen guter quasi-isotroper Steifigkeit weiterverarbeiten lassen.

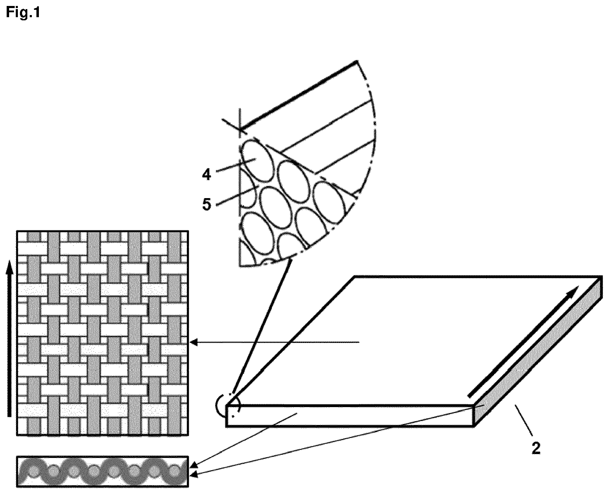

Weitere Einzelheiten und Vorteile der Erfindung ergeben sich aus den **Fig.1****,** **Fig.2****,** **Fig.3** und **Fig.4** sowie den Beschreibungen dieser bevorzugten Ausführungsformen.

**Fig. 1** zeigt eine Faserverbundwerkstofflage (2) mit Gewebeverstärkung in schematischer und perspektivischer Darstellung mit Ausschnittsvergrößerung der Ansichtsflächen. Das für eine Faserverbundwerkstofflage gemäß in **Fig. 1** eingesetzte textile Halbzeug auf Basis eines balancierten Gewebes verfügt über eine Leinwandbindung, worin jeweils 50% der Endlosfasern in 0° und in 90° orientiert sind. Die Ausschnittsvergrößerung in **Fig.1** zeigt, dass die Verstärkungsfasern der Faserverbundwerkstofflage in Form eines textilen Halbzeugs basierend auf Endlosfasern (4) vorliegen, die innerhalb der Lage in zwei Richtungen unidirektional ausgerichtet sind, wobei die Endlosfasern (4) in Form eines balancierten Gewebes in Leinwandbindung vorliegen und in einem Kunststoff (5), vorzugsweise einem auf Polycarbonat basierten Kunststoff, eingebettet sind. Die Orientierung der Faserverbundwerkstofflage wird durch die Orientierung der darin enthaltenen unidirektional ausgerichteten Endlosfasern bestimmt. Die Hauptrichtung, d.h. die Produktionsrichtung des textilen Halbzeugs, hier in Form eines balancierten Gewebes, ist in der **Fig. 1** mit einem Pfeil gekennzeichnet. Die Endlosfasern erstrecken sich über die gesamte Länge bzw. Breite der Faserverbundwerkstofflage.

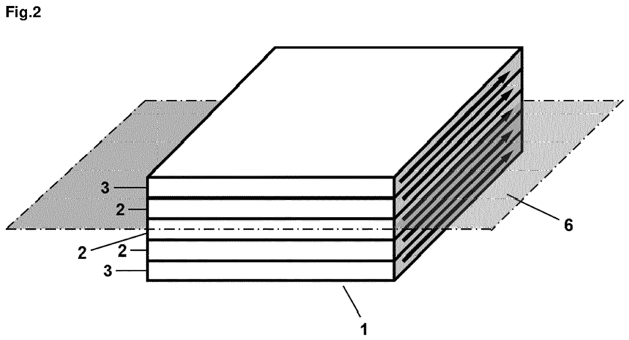

**Fig.2** zeigt einen erfindungsgemäßen Mehrschichtverbundwerkstoff (1) in schematischer und perspektivischer Darstellung aus fünf übereinanderliegenden Faserverbundwerkstofflagen in mittensymmetrischer Anordnung, wobei die drei innenliegenden Faserverbundwerkstofflagen (2) gleich orientiert sind und ihre Orientierung relativ zu den beiden außenliegenden Faserverbundwerkstofflagen (3) um 0° rotiert sind. Im Mehrschichtverbundwerkstoff (1) gemäß **Fig.2** sind somit alle fünf übereinanderliegenden Faserverbundwerkstofflagen gleich orientiert, was durch Pfeile angedeutet ist. Die Faserverbundwerkstofflagen (2) und (3) sind vollflächig miteinander verbunden. Die Faserverbundwerkstofflagen können sich in ihrem Aufbau, z.B. hinsichtlich Faseranteil, Faserwerkstoff, Gewebebindung unterscheiden. Der Lagenaufbau des Mehrschichtverbundwerkstoffs (1) ist in **Fig.2** an der Symmetrieebene (6) gespiegelt.

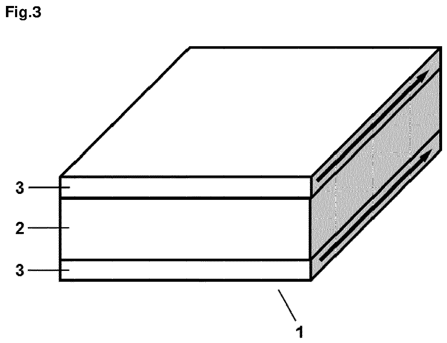

**Fig.3** zeigt einen Mehrschichtverbundwerkstoff (1) in schematischer und perspektivischer Darstellung aus drei übereinanderliegenden Faserverbundwerkstofflagen (3), (2), (3), wobei die innenliegende Faserverbundwerkstofflage (2) eine unterschiedliche Dicke als die beiden außenliegenden Faserverbundwerkstofflagen (3) aufweist. Die beiden außenliegenden Faserverbundwerkstofflagen (2) sind gleich orientiert. Die Faserverstärkung der innenliegenden Faserverbundwerkstofflage (2) kann in Form eines beliebigen Textils vorliegen. Eine Mittensymmetrie ist aufgrund des dreilagigen Aufbaus automatisch gegeben.

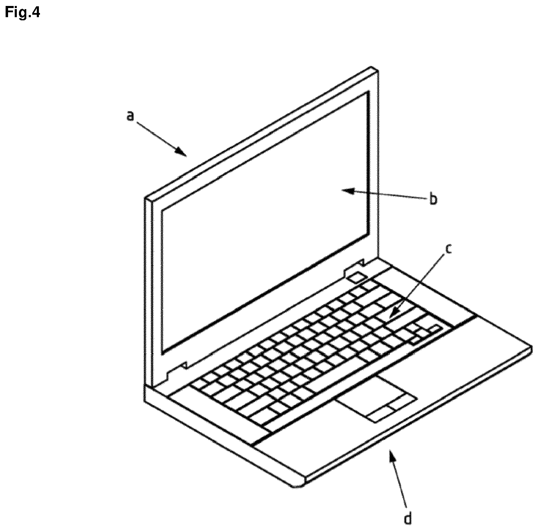

**Fig.4** zeigt ein Laptop in schematischer und perspektivischer Darstellung. Das Gehäuseteil des Laptops, welches die Monitorrückseite (a) des Monitors (b) bildet, wird in Fachkreisen auch als "a- cover" bezeichnet. Das Gehäuseteil des Laptops, welches die Unterseite (d) der Tastatur (c) bildet wird üblicherweise als "d-cover" bezeichnet. Die Monitorrückseite (a) und die Unterseite (d) des Laptops enthalten einen erfindungsgemäßen Mehrschichtverbundwerkstoff.

### Beispiele

### 1. Beschreibung der Rohstoffe und Prüfmethoden

### Komponente A

Lineares Polycarbonat auf Basis von Bisphenol A mit einer Schmelze-Volumenfließrate MVR von 14,0 cm³ / 10 min (gemäß ISO 1133, bei einer Prüftemperatur 240°C und 1,2 kg Belastung).

### Komponente B

Carbonfaser Torayca^{®} T300 der Firma Toray Carbon Fiber Europe mit einem Einzelfilamentdurchmesser von 7, einer Dichte von 1,76 g/cm³ und einem Zugmodul von 230 GPa. Geliefert werden 3000 Einzelfilamente in einem Faserbündel (Roving) als Gewebe mit Köperbindung und einem Flächengewicht von 200 g/m².

### Messmethoden:

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

### Bestimmung der Dicke und des Dickenverhältnisses

Die Dickenbestimmung der Faserverbundwerkstofflagen sowie der nach dem Fügen resultierenden Mehrschichtverbundwerkstoffe erfolgte mit einer handelsüblichen Bügelmessschraube. Als Ergebnis wird der arithmetische Mittelwert von 5 Einzelmessungen an unterschiedlichen Positionen angegeben.

Das Dickenverhältnis der beiden außenliegenden Faserverbundwerkstofflagen zur Summe der innenliegenden Faserverbundwerkstofflagen kann zum einen im Zuge der Herstellung durch Bestimmung der Einzeldicken der Faserverbundwerkstofflagen vor dem Verbinden der Faserverbundwerkstofflagen zum Mehrschichtverbundwerkstoff erfolgen. Die praktischen Versuche zeigten, dass sich bei den gängigen Verfahren zum Verbinden der Faserverbundwerkstofflagen, insbesondere Laminieren unter Druck- und Wärmeeinwirkung, das Verhältnis der Dicken zueinander auch bei einer Kompression und damit Verringerung der Dicken insgesamt nicht wesentlich ändert. Die hier beschriebenen Dickenverhältnisse beziehen sich auf die im Zuge der Herstellung bestimmten Einzeldicken der Faserverbundwerkstofflagen vor dem Verbinden der Faserverbundwerkstofflagen zum Mehrschichtverbundwerkstoff.

Alternativ kann die Bestimmung des Dickenverhältnisses auch im fertigen Mehrschichtverbundwerkstoff erfolgen. Hierzu wird ein Querschnitt des Materials mikroskopisch untersucht. Aufgrund des Orientierungswechsels der Faserlaufrichtung beim Übergang von den innenliegenden zu den beiden außenliegenden Faserverbundwerkstofflagen lassen sich diese Faserverbundwerkstofflagen im Mikroskop gut identifizieren. Für die Schichtdickenbestimmung wird als Schichtgrenze eine Ebene eingezogen, die parallel zu den durch die Faserlaufrichtung bestimmten Ebenen verläuft und auf der Hälfte des Abstandes von letzter zur außenliegenden Faserverbundwerkstofflage gehörenden Endlosfaser und erster zur innenliegenden Faserverbundwerkstofflage gehörenden Endlosfaser eingezogen wird.

### Hohlraumgehaltsbestimmung

Die Ermittlung erfolgte mittels der Dickendifferenzmethode wie oben beschrieben an den Prüfmustern, welche zuvor mittels einer Intervallheizpresse gefügt wurden. Die Bestimmung der tatsächlichen Probendicke erfolgte an 5 Messpunkten, welche über das zu untersuchende Bauteil verteilt waren. Für die Berechnung des Hohlraumgehalts wurde der arithmetische Mittelwert der 5 Einzelbestimmungen der tatsächlichen Probendicke verwendet.

### Biege-E-Modul

Für die Bestimmung des Biege-E-Moduls wurden aus den hergestellten Mehrschichtverbundwerkstoffplatten zunächst 5 Probekörper je Orientierung (0°, 90°) mit einer Mutronic Diadisc 5200 Trennsäge unter Verwendung von Dia Trennscheiben CFK fein präpariert. Anschließend wurde mithilfe einer Bügelmessschraube die für die Prüfungen relevanten, exakten Probenkörpermaße (Breite und Dicke) bestimmt. Die Durchführung der Prüfung erfolgte in Anlehnung an DIN ISO 14125. Abweichungen zu dieser Norm beziehen sich auf die Probekörperdicke, die aufgrund der Anzahl der Faserverbundlagen im Mehrschichtaufbau lagenspezifisch und unveränderlich ist und so von der in der Norm vorgeschriebenen Probendicke abweichen kann. In dem resultierenden Kraft- Weg-Diagramm entspricht die Steigung dem Biege-E-Modul. Als Ergebnis wurde der arithmetische Mittelwert der 5 Einzelmessungen ermittelt und wird hier angegeben.

### Ermittlung des Faservolumengehalts

In dem vorliegenden Prozess wurde das textile Halbzeug auf Basis von Fasern der Komponente B mit einer konstanten Geschwindigkeit der Benetzung durch die Kunststoffschmelze auf Basis der Komponente A geführt. Hierdurch errechnete sich der Faservolumengehalt einer Faserverbundwerkstofflage aus der Differenz des Schmelzevolumenstroms der Kunststoffschmelze und dem Produkt aus der Produktionsgeschwindigkeit der Faserverbundwerkstofflage sowie dem zu produzierenden Querschnitt der Faserverbundwerkstofflage.

### 2. Herstellung und Ergebnisse

### Herstellung der Faserverbundwerkstofflagen

Die Herstellung der Faserverbundwerkstofflage aus den oben beschriebenen Komponenten A und B erfolgte nach dem in EP 0 131 879 A1 beschriebenen Verfahren. Das Textil auf Basis eines Gewebes mit einem Flächengewicht von 200g/m² und Köperbindung wurde mit Komponente A beidseitig auf der Rohtextilebene beaufschlagt. Nach erfolgter Druck-/ Temperaturbeaufschlagung resultierten nachfolgende Zusammensetzungen der Faserverbundwerkstofflagen als Organoblech:

**Tabelle 1: Übersicht über die Eigenschaften der einzelnen Verbundwerkstofflagen**

| Verbundwerkstofflage | Gehalt an Komponente A in [Vol.-%] | Gehalt an Komponente B in [Vol.-%] | Schichtdicke in [µm] |
|---|---|---|---|
| 1 | 55 | 45 | 250 |

### Herstellung der Mehrschichtverbundwerkstoffe

Durch gezielte Aneinanderreihung der Faserverbundwerkstofflagen in nachstehenden Orientierungen wurden Mehrschichtverbundwerkstoff-Prüfmuster erhalten, welche zur weiteren Charakterisierung genutzt wurden.

**Tabelle 2: Übersicht über Typ, Orientierung und Anzahl der verwendeten Faserverbundwerkstofflagen in den Mehrschichtverbundwerkstoffen**

| Prüfmuster | Innenlagen | | | Außenlagen | | |
|---|---|---|---|---|---|---|
| | Verbundwerkstofflage | Orientierung | Gesamtanzahl | Verbundwerkstofflage | Orientierung | Gesamtanzahl |
| M | 1 | 0° | 6 | 1 | 0° | 2 |

Die Prüfmuster wurden nach der Aneinanderreihung in einer Intervallheißpresse semikontinuierlich miteinander verbunden. Der flächig anliegende Pressdruck betrug hierbei 25 bar. Die Temperatur in der Heizzone lag bei 280°C und die Temperatur in der Kühlzone lag bei 100°C. Des Weiteren lag der Vorschub je Takt bei 30 mm und die Taktzeit bei 10 Sek. Die Dicken der einzelnen Textil-Muster blieben nach dem Fügen zu einem Prüfmuster in diesem erhalten.

### Ergebnisse der Biege-E-Modul Ermittlung und der Bestimmung des Hohlraumgehalts

**Tabelle 3: Biege-E-Module in 0° und 90° Orientierung von Mehrschichtverbundwerkstoffen mit unterschiedlichem Lagenaufbau**

| Prüfmuster | Biege-E-Modul in 90° Orientierung in [GPa] | Biege-E-Modul in 0° Orientierung in [GPa] | Prüfmusterdicke in [µm] | Hohlraumgehalt in [%] |
|---|---|---|---|---|
| M | 46,4 | 47,6 | 1,927 | 0% |

Die Versuche zeigen, dass ein erfindungsgemäßer Polycarbonat basierter Mehrschichtverbundwerkstoff M sowohl in 90°-Orientierung als auch in 0°-Orientierung ein gleichwertiges Biege E-Modul aufwies, das zudem vergleichbar mit dem Biege-E-Modul metallischer Werkstoffe war (z.B. Magnesium: 44 GPa, unabhängig von der Probenorientierung). Ergebnisse, die z.B. in WO 2017/072053 A1 gezeigt werden, weisen in 90° Orientierung jeweils Biege-E-Module auf, die nur maximal 67%, teilweise nur 15% des entsprechenden Werts in 0°-Richtung betragen und sich somit deutlich von den Eigenschaften metallischer Werkstoffe unterscheiden. Mit den für einen auf Basis von Kunststoff der Komponente A und textilem Halbzeug der Komponente B erfindungsgemäßen Mehrschichtverbundwerkstoff ermittelten Werten ist gewährleistet, dass die erfindungsgemäßen Proben einer multiaxialen Belastung, wie etwa dem Herunterfallen beispielsweise eines daraus herzustellenden Bauteils, insbesondere Gehäuses, oder einer ungewollten flächigen Belastung desselben, standhalten. Des Weiteren ist ersichtlich, dass der Gehalt an Hohlräumen durch den Herstellungsprozess minimiert wurde und für alle untersuchten Proben unterhalb von 0,5% lag.

## Patentansprüche

1. Mehrschichtverbundwerkstoff (1), umfassend mindestens drei übereinander liegende Faserverbundwerkstofflagen (2) und (3), die relativ zueinander definiert werden als zwei außenliegende Faserverbundwerkstofflagen (3) und mindestens eine innenliegende Faserverbundwerkstofflage (2), wobei
jede dieser mindestens drei Faserverbundwerkstofflagen (2) und (3), Endlosfasern (4) in Form eines textilen Halbzeugs enthält, wobei die Endlosfasern (4) innerhalb der jeweiligen Faserverbundwerkstofflage (2) oder (3) beliebig orientiert sind und in thermoplastischem Kunststoff (5) eingebettet sind,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
wobei die Orientierung einer Faserverbundwerkstofflage (2) oder (3) durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet.

2. Mehrschichtverbundwerkstoff (1) gemäß Anspruch 1, **dadurch gekennzeichnet, dass** das textile Halbzeug ein balanciertes Gewebe, Vlies oder eine Fasermatte ist.

3. Mehrschichtverbundwerkstoff (1) gemäß Anspruch 1 oder 2, **dadurch gekennzeichnet, dass** der thermoplastische Kunststoff (5) ausgewählt wird aus der Gruppe bestehend aus Polycarbonaten, Polybutylenterephthalaten, Styrol-Acrylnitrilen, Polystyrolen, Polyetheretherketonen, Polyetherimiden, Polysulfonen, thermoplastischen Elastomeren, Polyphenylensulfiden und deren Mischungen, insbesondere Polycarbonat.

4. Mehrschichtverbundwerkstoff (1) gemäß einem der Ansprüche 1 bis 3, **dadurch gekennzeichnet, dass** das Dickenverhältnis der Summe der beiden außenliegenden Faserverbundwerkstofflagen (3) zur Summe aller innenliegenden Faserverbundwerkstofflagen (2) im Bereich von 0,25 bis 5 liegt.

5. Mehrschichtverbundwerkstoff (1) gemäß einem der Ansprüche 1 bis 4, **dadurch gekennzeichnet, dass** die Faserverbundwerkstofflagen (2) und (3) erhältlich sind durch Auftragen eines geschmolzenen, thermoplastischen Kunststoffs auf ein über die Glasübergangstemperatur des einzusetzenden Kunststoffs vorgeheiztes Rohtextil.

6. Mehrschichtverbundwerkstoff (1) gemäß einem der Ansprüche 1 bis 5, **dadurch gekennzeichnet, dass** der Faservolumengehalt der außenliegenden Faserverbundwerkstofflagen (3) höchstens 60 Vol.-%, bezogen auf das Volumen der außenliegenden Faserverbundwerkstofflagen (3) beträgt.

7. Mehrschichtverbundwerkstoff (1) gemäß einem der Ansprüche 1 bis 6, **dadurch gekennzeichnet, dass** die mindestens drei Faserverbundwerkstofflagen (2) und (3) im Wesentlichen symmetrisch angeordnet sind, wobei die beiden außenliegenden Faserverbundwerkstofflagen (3) in Bezug auf wenigstens ein Merkmal aus der Gruppe chemische Zusammensetzung, Faservolumengehalt und Schichtdicke im Wesentlichen gleich aufgebaut sind.

8. Mehrschichtverbundwerkstoff (1) gemäß einem der Ansprüche 1 bis 7, **dadurch gekennzeichnet, dass** der Mehrschichtverbundwerkstoff (1) eine Gesamtdicke von 0,3 bis 2,5 mm aufweist.

9. Mehrschichtverbundwerkstoff (1) gemäß einem der Ansprüche 1 bis 8, wobei der Mehrschichtverbundwerkstoff (1) ein bis acht innenliegende Faserverbundwerkstofflagen (2) umfasst.

10. Mehrschichtverbundwerkstoff (1) gemäß einem der Ansprüche 1 bis 9, wobei die mindestens drei Faserverbundwerkstofflagen (2) und (3) im Wesentlichen keine Hohlräume, insbesondere im Wesentlichen keine Lufteinschlüsse, aufweisen.

11. Mehrschichtverbundwerkstoff (1) gemäß einem der Ansprüche 1 bis 10,wobei die Endlosfasern (4) ausgewählt sind aus der Gruppe bestehend aus Glasfasern, Carbonfasern, Basaltfasern, Aramidfasern, Liquid-crystal-Polymer-Fasern, Polyphenylensulfid-Fasern, Polyetherketon-Fasern, Polyetheretherketon-Fasern, Polyetherimid-Fasern und deren Mischungen, insbesondere Glasfasern und/oder Carbonfasern.

12. Verfahren zur Herstellung eines, Mehrschichtverbundwerkstoffs gemäß einem der Ansprüche 1 bis 11 umfassend folgende Schritte:
- Bereitstellen mindestens einer innenliegenden Faserverbundwerkstofflage (2) und zweier außenliegenden Faserverbundwerkstofflagen (3),
- Einlegen der mindestens einen innenliegenden Faserverbundwerkstofflage (2) zwischen die außenliegenden Faserverbundwerkstofflagen (3) mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird,
- Verbinden der geschichteten Faserverbundwerkstofflagen (2) und (3), insbesondere mittels Druck und Temperatur, zum Mehrschichtverbundwerkstoff (1).

13. Elektronisches Gerät oder Gehäuseteil, **dadurch gekennzeichnet, dass** dieses einen Mehrschichtverbundwerkstoff (1) gemäß einem der Ansprüche 1 bis 11 enthält.

14. Elektronisches Gerät gemäß Anspruch 13, **dadurch gekennzeichnet, dass** es sich bei dem elektronischen Gerät um einen Monitor, ein Tablet, ein Laptop, ein Mobiltelefon oder um einen Computer handelt, vorzugsweise um ein Laptop.

15. Gehäuseteil gemäß Anspruch 14, wobei das Gehäuse eines elektronischen Geräts die Monitorrückseite oder die Unterseite eines Laptops darstellt.

16. Verwendung wenigstens eines Mehrschichtverbundwerkstoffs umfassend zwei außenliegende Faserverbundwerkstofflagen (3) und mindestens eine innenliegende Faserverbundwerkstofflage (2), wobei jede dieser mindestens drei Faserverbundwerkstofflagen (2) und (3) Endlosfasern (4) in Form eines textilen Halbzeugs, vorzugsweise in Form eines balancierten Gewebes Vlieses oder Fasermatte, enthält, wobei die Endlosfasern (4) innerhalb der jeweiligen Faserverbundwerkstofflage (2) oder (3) beliebig orientiert und in thermoplastischem Kunststoff (5) eingebettet sind, zur Herstellung von Gehäusen, vorzugsweise von Gehäusen für elektrische oder elektronische Geräte,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet und der thermoplastische Kunststoff (5) ausgewählt wird aus der Gruppe bestehend aus Polycarbonaten, Polybutylenterephthalaten, Styrol-Acrylnitrilen, Polystyrolen, Polyetheretherketonen, Polyetherimiden, Polysulfonen, thermoplastischen Elastomeren, Polyphenylensulfiden und deren Mischungen, insbesondere Polycarbonat.
